(19) Europäisches Patentamt / European Patent Office / Office européen des brevets

(11) **EP 3 597 444 B1**

(12) **EUROPEAN PATENT SPECIFICATION**

(45) Date of publication and mention
of the grant of the patent:
**27.12.2023  Bulletin 2023/52**

(21) Application number: **18771591.7**

(22) Date of filing: **22.03.2018**

(51) International Patent Classification (IPC):
**B42D 25/41** (2014.01)    **B42D 25/305** (2014.01)
**B42D 25/36** (2014.01)    **B42D 25/351** (2014.01)
**G06K 19/06** (2006.01)    **B41M 5/30** (2006.01)
**B41M 5/327** (2006.01)    **B41M 5/333** (2006.01)
**B41M 5/34** (2006.01)    **B41M 5/42** (2006.01)
**B41M 3/14** (2006.01)    **B41M 5/323** (2006.01)

(52) Cooperative Patent Classification (CPC):
**B42D 25/41; B41M 5/30; B42D 25/305;**
**B42D 25/351; B42D 25/36; G06K 19/06037;**
**G06K 19/06046;** B41M 3/142; B41M 5/323;
B41M 5/327; B41M 5/3275; B41M 5/3335;
B41M 5/34; B41M 5/42; G06K 19/06159

(86) International application number:
**PCT/JP2018/011465**

(87) International publication number:
**WO 2018/174178 (27.09.2018 Gazette 2018/39)**

(54) **RECORDING MEDIUM**

AUFZEICHNUNGSMEDIUM

SUPPORT D'IMPRESSION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **22.03.2017   JP 2017056347**

(43) Date of publication of application:
**22.01.2020   Bulletin 2020/04**

(73) Proprietors:
• **Kabushiki Kaisha Toshiba**
  **Tokyo 105-0023 (JP)**
• **Toshiba Infrastructure Systems &**
  **Solutions Corporation**
  **Kawasaki-shi, Kanagawa 212-0013 (JP)**

(72) Inventors:
• **NEMOTO, Nobuki**
  **Tokyo 105-0023 (JP)**
• **NAKANO, Takahisa**
  **Tokyo 105-0023 (JP)**
• **MORIMOTO, Fumitoshi**
  **Tokyo 105-0023 (JP)**

(74) Representative: **Horn Kleimann Waitzhofer**
**Schmid-Dreyer**
**Patent- und Rechtsanwälte PartG mbB**
**Theresienhöhe 12**
**80339 München (DE)**

(56) References cited:
**DE-A1-102014 015 280      JP-A- H0 761 181**
**JP-A- 2000 127 551      JP-A- 2012 083 957**
**JP-A- 2013 071 330      JP-A- 2013 107 289**
**US-A1- 2006 231 997      US-B1- 6 934 043**
**US-B2- 8 827 315**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS-REFERENCE TO RELATED APPLICATIONS

FIELD

Embodiments described herein relate generally to a recording medium.

BACKGROUND

Conventionally, in recording media used for valuable securities, certificate documents, and so forth, various types of falsification preventing techniques are used to improve the falsification resistance.

Particularly, as a technique for preventing falsification performed by replacement of an image or the like in an area for recording the image or the like on a print face, various techniques have been proposed (for example, see Japanese Patent No. 4844894).

Of these techniques, according to a technique of recording additional information (additional image) by laser machining or fluorescent material printing to an image on the print face, falsification itself becomes difficult to make, but the following problem arises. Specifically, in a case where the print face is elaborately copied, the falsification preventing effect is lowered, and authenticity determination becomes not easy to perform.

In order to avoid the above problem, a technique has been proposed in which a recording medium is provided with a layer, such as a magnetic recording layer, that enables recording other than optical recording, and additional information is recorded to this layer by using another recording apparatus, such as a magnetic recording apparatus (for example, see Japanese Patent No. 4390377).

However, in the case where additional information is recorded by using another recording apparatus that performs recording other than optical recording, an apparatus for reading the additional information is also required when authenticity determination is performed.

In this respect, it incurs a large amount of operational cost to prepare such an apparatus at all the sites where authenticity determination is to be performed. Accordingly, there is a possibility that the apparatus cannot be prepared at some of the sites, for which the opportunity for performing authenticity determination is limited consequently.

DE 10 2014 015 280 A1 discloses a portable recording medium with a structure of a plurality of laminated layers, the data carrier having at least two laser-activatable layers and one non-laser-activatable layer. Markings are made in the laser-activated layers by means of a laser. The markings are optically identifiable when looking at an end face (that is the side or edge therefore not the front or back face) of the recording medium.

JP 2013-107289 A discloses an information recording medium composed by providing in series a laser coloring layer containing an inorganic material and binder resin and a reversible heat sensitive coloring layer on one surface of a base material.

The present invention has been made in consideration of the above, and has an object to provide a recording medium that can easily prevent falsification with a simple structure, and allows authenticity determination to be performed relatively easily.

The invention is defined by claim 1. The recording medium is a recording medium in a card, the recording medium having a front face, a back face and end faces. In particular, the recording medium includes a substrate, and a color development layer laminated on the substrate, said color development layer including a plurality of color development layers and being provided with a plurality of lines for security each extending in a first direction along a lamination surface of the substrate from an end face of the recording medium, such that presence of the line for security is optically identifiable at the front face of the recording medium, and in a second direction across the thickness of one of the color development layers, such that the presence of the lines for security is optically identifiable at the end face of the recording medium.

BRIEF DESCRIPTION OF THE DRAWINGS

Fig. 1 is an external front view of a recording medium (falsification preventing medium) according to a first non-claimed example, in a state where information recording has been made;

Fig. 2 is a detailed configuration explanatory diagram of the recording medium according to the first non-claimed example;

Figs. 3A to 3D are partially enlarged explanatory views each illustrating a recording medium according to a modification of the first non-claimed example, as seen from its end face;

Fig. 4 is an explanatory diagram of a correlation table of an information record example according to the modification of the first non-claimed example;

Fig. 5 is a detailed configuration explanatory diagram of a recording medium according to a first embodiment of the invention;

Figs. 6A to 6C are explanatory diagrams of the color development principle in monochromatic color development according to the first embodiment of the invention;

Figs. 7A to 7C are explanatory diagrams of temperature control in monochromatic color development according to the first embodiment of the invention;

Fig. 8 is an explanatory diagram of an example of laser irradiation conditions;

Fig. 9 is a schematic configuration block diagram of a laser recording apparatus according to an embodiment;

Fig. 10 is an explanatory diagram of the relation between an energy amount and an input time for each color development layer to make color development alone;

Figs. 11A to 11D are explanatory views of code assignment according to a first aspect of the first embodiment of the invention;

Fig. 12 is an explanatory diagram of a correlation table of an information record example in the code assignment according to the first aspect of the first embodiment of the invention;

Figs. 13A to 13D are explanatory views of code assignment according to a second aspect of the first embodiment of the invention;

Fig. 14 is an explanatory diagram of a correlation table of an information record example in the code assignment according to the second aspect of the first embodiment of the invention;

Figs. 15A to 15D are explanatory views of code assignment according to a third aspect of the first embodiment of the invention;

Fig. 16 is an explanatory diagram of a correlation table of an information record example in the code assignment according to the third aspect of the first embodiment of the invention;

Figs. 17A to 17D are explanatory views of code assignment according to a fourth aspect of the first embodiment of the invention;

Fig. 18 is an explanatory diagram of a correlation table of an information record example in the code assignment according to the fourth aspect of the first embodiment of the invention;

Figs. 19A to 19C are explanatory diagrams (part 1) of temperature control in color mixing color development according to the first embodiment of the invention;

Fig. 20 is an explanatory diagram (part 2) of temperature control in color mixing color development according to the first embodiment of the invention;

Fig. 21 is a detailed configuration explanatory diagram of a recording medium according to a second example;

Fig. 22 is another detailed configuration explanatory diagram of a recording medium according to the second example;

Fig. 23 is still another detailed configuration explanatory diagram of a recording medium according to the second example;

Fig. 24 is still another detailed configuration explanatory diagram of a recording medium according to the second example;

Fig. 25 is still another detailed configuration explanatory diagram of a recording medium according to the second example;

Fig. 26 is a detailed configuration explanatory diagram of a recording medium according to a second embodiment of the invention;

Figs. 27A to 27D are explanatory views of code assignment according to a first aspect of the second embodiment of the invention;

Fig. 28 is an explanatory diagram of a correlation table of an information record

example in the code assignment according to the first aspect of the second embodiment of the invention;

Figs. 29A to 29D are explanatory views of code assignment according to a second aspect of the second embodiment of the invention;

Fig. 30 is an explanatory diagram of a correlation table of an information record

example in the code assignment according to the second aspect of the second embodiment of the invention;

Figs. 31A to 31D are explanatory views of code assignment according to a third aspect of the second embodiment of the invention;

Fig. 32 is an explanatory diagram of part (where the upper-order four bits are 0001) of a correlation table of an information record example in the code assignment according to the third aspect of the second embodiment of the invention;

Fig. 33 is an explanatory diagram of a recording medium according to a first aspect of a third embodiment of the invention;

Fig. 34 is an explanatory diagram of a recording medium according to a second aspect of the third embodiment of the invention;

Fig. 35 is an explanatory diagram of a recording medium according to a third aspect of the third embodiment of the invention;

Fig. 36 is a schematic configuration view of a recording medium according to a third non-claimed example;

Fig. 37 is an external view of the recording medium according to the third non-claimed example;

Fig. 38 is an explanatory diagram of a recording medium obtained by recording invisible information to the recording medium as illustrated in Fig. 1;

Fig. 39 is an explanatory diagram of a recording medium obtained by recording invisible information to the recording medium as illustrated in Fig. 21; and

Fig. 40 is a schematic configuration block diagram of a checking apparatus.

DETAILED DESCRIPTION

Exemplary embodiments of a recording medium will be explained below in detail with reference to the accompanying drawings.

[1] First Non-claimed Example

First, an explanation will be given of a recording medium according to a first non-claimed example.

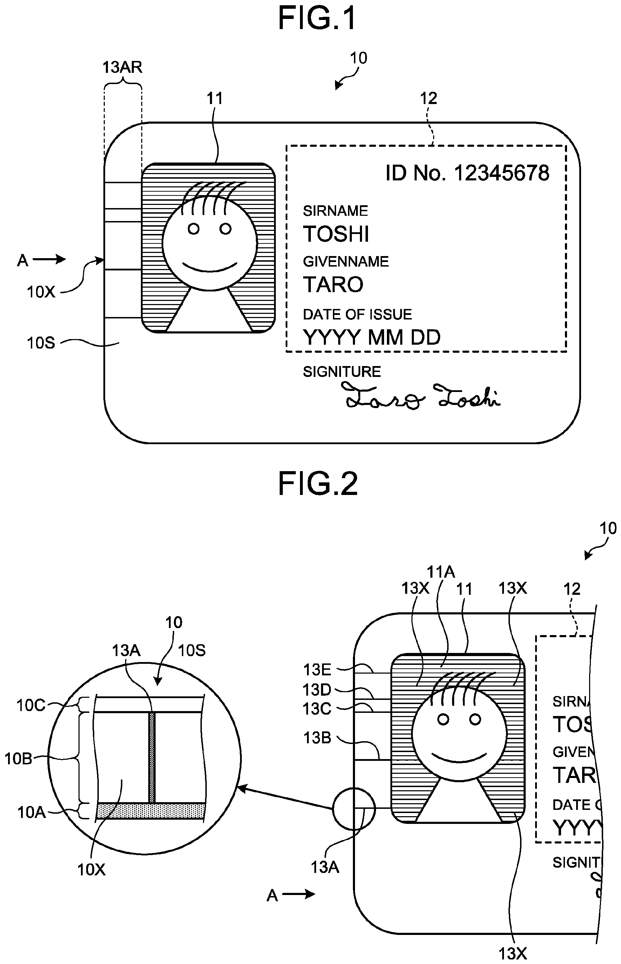

Fig. 1 is an external front view of a recording medium (falsification preventing medium) according to the first non-claimed example, in a state where information recording has been made.

In a roughly classified sense, the recording medium 10 on which information recording has been made includes an image formation region 11 that records an image, a specific information recording area 12 that records specific information, such as ID information, full name, and date of issuance, and a falsification preventing information recording part 13AR that records falsification preventing information for preventing falsification.

In this case, the falsification preventing information recording part 13AR includes portions not only on a front face 10S of the recording medium 10, but also on an end face 10X of the recording medium 10 as seen in an arrow A direction in Fig. 1.

Fig. 2 is a detailed configuration explanatory diagram of the recording medium according to the first non-claimed example.

In the case of Fig. 2, for example, the image formation region 11 of the recording medium 10 includes an image background part 11A, which is provided with a number of fine lines 13X that are arranged in parallel with each other to form a background color (for example, gray).

Further, some of the lines 13X are formed with extensions up to the end face 10X of the recording medium 10, as lines 13A to 13E, specifically.

Fig. 2 includes a round frame which illustrates therein a partially enlarged view of the end face 10X of the recording medium 10 as seen in the arrow A direction.

As illustrated in this enlarged view, the recording medium 10 includes a substrate 10A, and a color development layer 10B and a protection layer 10C serving as a surface layer are laminated on the substrate 10A in this order.

Further, the line (line for security) 13A, which is one of the lines 13X, is formed to be visually recognized in the arrow A direction.

The line for security herein is recorded to the recording medium 10 for the user of the recording medium 10 or a third party (excluding a security administrator) for purpose of not only falsification prevention but also authenticity determination; alternatively, the line for security is a line that allows recording information such that recorded contents cannot be deciphered easily.

Accordingly, when the position of the line 13A observed from the front face 10S of the recording medium 10 agrees with the position of the line 13A observed from the end face 10X of the recording medium 10, it can be found that the print face of the recording medium 10 has likely not been subjected to falsification or tampering.

Further, when the positions of all the lines 13A to 13E observed from the front face 10S of the recording medium 10 agree with the positions of all the lines 13A to 13E observed from the end face 10X of the recording medium 10, it can be confirmed that the print face of the recording medium 10 has more likely not been subjected to falsification or tampering.

[1.1] Modification of First Non-claimed Example

Next, an explanation will be given of a modification of the first non-claimed example.

In the above description, an explanation has been given of a case where, when the positions of lines observed from the front face 10S of the recording medium 10 agree with the positions of the lines observed from the end face 10X of the recording medium 10, it can be confirmed that the print face of the recording medium 10 has not been subjected to falsification or tampering. In this modification of the first non-claimed example, an explanation will be given of a case where information is recorded by using a plurality of lines, and, on the basis of whether the recorded information agrees, it is confirmed that the print face of the recording medium 10 has not been subjected to falsification or tampering.

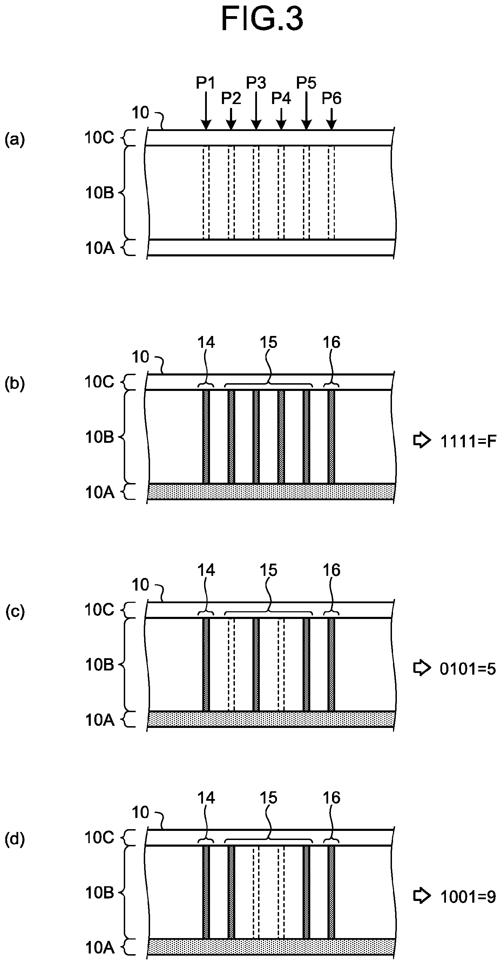

Figs. 3A to 3D are partially enlarged explanatory views each illustrating a recording medium according to the modification of the first non-claimed example, as seen from its end face.

As illustrated in Fig. 3A, in the color development layer 10B of the recording medium 10, for example, six information recording positions P1 to P6 are set.

Here, the information recording position P1 serves as the recording position of a start flag 14 that indicates the record starting position of information. The information recording position P6 serves as the recording position of an end flag 16 that indicates the record ending position of the information.

Further, the four information recording positions P2 to P5 serve as information recording positions that can each record information of one bit, and thus record a code expressed by four bits as a whole.

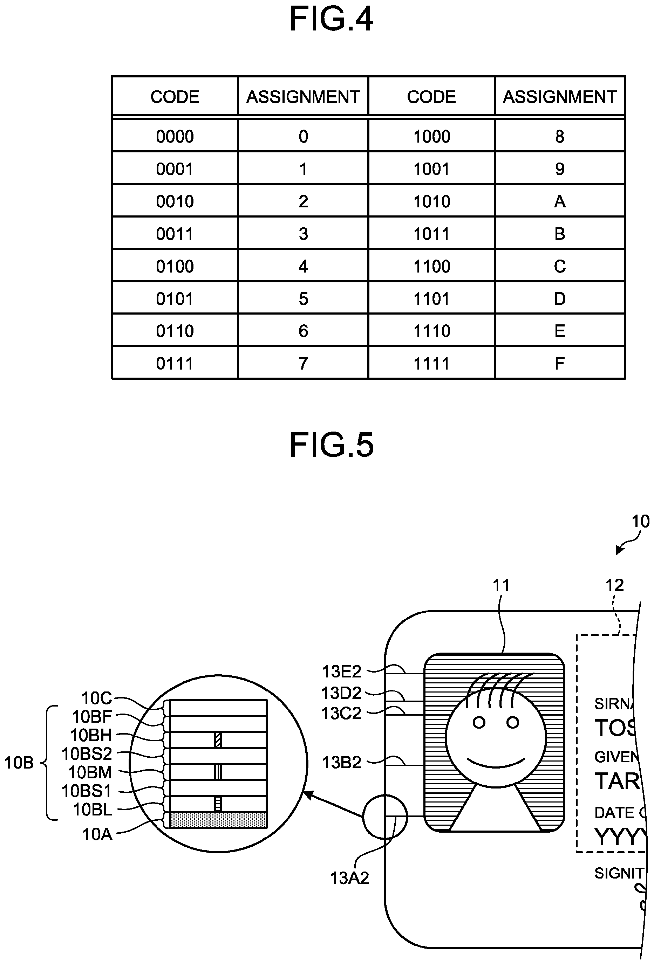

Fig. 4 is an explanatory diagram of a correlation table of an information record example according to the modification of the first non-claimed example.

In the case of this modification, any one of 16 codes (0 to F in hexadecimal), each expressed by four bits as information, can be recorded at the information recording positions P2 to P5 as an information code 15.

Specifically, in the case of this modification, the information recording position P1 always has a line recorded as the start flag 14, and the information recording position P6 always has a line recorded as the end flag 16.

Here, for example, in the example illustrated in Fig. 3B, the information recording position P2 has a line, the information recording position P3 has a line, the information recording position P4 has a line, and the information recording position P5 has a line, so that the information code 15 = "1111" stands. Thus, it can be seen that the value of the information code 15 recorded here is "F" from the table of Fig. 4.

Similarly, in the example illustrated in Fig. 3C, the information recording position P2 has no line, the information recording position P3 has a line, the information recording position P4 has no line, and the information recording position P5 has a line, so that the information code 15 = "0101" stands. Thus, it can be seen that the value of the information code 15 recorded here is "5" from the table of Fig. 4.

Further, in the example illustrated in Fig. 3D, the information recording position P2 has a line, the information recording position P3 has no line, the information recording position P4 has no line, and the information recording position P5 has a line, so that the information code 15 = "1001" stands. Thus, it can be seen that the value of the information code 15 recorded here is "9" from the table of Fig. 4.

In the case described above, information of four bits is used. However, as the specific information, for example, an ID number ("12345678" in the example of Fig. 1) that can specify the owner of the recording medium 10 may be recorded.

As in the example of Fig. 1, where an ID number is composed of a numerical value of eight digits, the ID number can be recorded by recording 48 lines (the maximum value) = 8 digits $\times$ 6 positions of the information recording positions P1 to P6, up to the end face 10X of the recording medium 10.

Here, of these lines, eight lines are used as start flags 14, and other eight lines are used as end flags, and thus the remaining 32 lines (the maximum value) are used to represent the ID number.

Next, an explanation will be given of the configuration of respective lines in detail when lines (lines 13A to 13E in the example of Fig. 2) are to be actually recorded in the recording medium 10. In the following explanation, as the lines 13A to 13E do not need distinction to identify each line, each of these lines will be referred to as "line 13X".

Where the line 13X is recorded from the image formation region 11 to the end face 10X of the recording medium 10, the line width of the line 13X may be made as thin as to be invisible to human unaided eyes.

Specifically, the thickness of the line 13X is preferably set to about 85 pm or less, which is equal to or less than 300 lines per inch (lpi).

Where the line is recorded with this thinness, to be beyond human visual resolution, the concealment property is improved.

In this case, although there is no theoretical lower limit in the thickness of the line to be recorded, as the line width is smaller, the enlargement magnification necessary for cross-sectional observation is increased at the time of authenticity determination. Thus, there is a trade-off between the concealment property and the convenience (easiness) of the authenticity determination.

Accordingly, the line width in recording may be arbitrarily determined in consideration of the performance of a printing apparatus (recording apparatus) and the convenience of the authenticity determination.

However, in the case of a use in which there is no problem even if it is easily found that lines 13X are recorded from the image formation region 11 to the end face 10X, the line width of the line 13X is not limited to the example described above.

Further, where the line 13X is used for the background in the image recording area and has a line width of 85 pm, and the image formation region 11 has a size of, for example, 20 mm $\times$ 27.5 mm, about 240 lines 13X can be recorded even in the case of the width 20 mm. Thus, in the example described above, information of 32 digits can be recorded.

Further, the thickness of the color development layer 10B is preferably set to 1 pm or more and 700 pm or less. This is because, if the thickness of the color development layer 10B is smaller than 1 pm, it becomes difficult to perform observation on the end face 10X of the recording medium 10 by using a simple magnifying glass, such as a loupe. On the other hand, if the thickness of the color development layer 10B is larger than 700 pm, the recording medium 10 come to exceed a thickness of 0.7 mm, which is the thickness of standard cards, such as a credit card.

Further, the thickness of the color development layer 10B is more preferably set to 20 pm or less. This is because, where this thickness is 20 pm or less, the line thickness at the end face 10X of the recording medium 10 becomes 20 pm or less, which is not larger than the diameter of dots formed by a general and inexpensive printer, such as an inkjet printer. In this case, forgery by printing on the end face 10X becomes difficult and expensive, and thus the falsification preventing effect is enhanced.

Next, an explanation will be given of the configuration of the recording medium 10 in more detail.

As described above, the recording medium 10 according to the first non-claimed example includes the substrate 10A, the color development layer 10B, and the protection layer 10C serving as a surface layer.

First, the substrate 10A will be explained.

The substrate 10A may be made by using polyethylene terephthalate (PET), polyvinyl chloride (PVC), polycarbonate (PC), polyester, and/or the like, which are generally used as a card material, paper material, and/or film material.

Further, a material usable for the substrate 10A, other than those described above, may be exemplified by paper (form paper) materials and resin materials disclosed in Japanese Patent No. 3889431, Japanese Patent No. 4215817, Japanese Patent No. 4329744, and Japanese Patent No. 4391286.

Specifically, the usable material may be exemplified by polyethylene terephthalate (A-PET, PETG), polycyclohexane 1,4-dimethyl phthalate(PCT), polystyrene (PS), polymethyl methacrylate (PMMA), transparent ABS (MABS), polypropylene (PP), polyethylene (PE), polyvinyl alcohol (PVA), styrene butadiene copolymer (SBR), acrylic resins, acrylic modified urethane resins, styrene/acrylic resins, ethylene/acrylic resins, urethane resins, rosin modified maleic acid resins, vinyl chloride/vinyl acetate copolymer, polyvinyl acetal resins, polyamide resins, cellulose resins, such as hydroxyethyl cellulose, hydroxypropyl cellulose, and nitrocellulose, polyolefin resins, polyamide resins, other resins, such as biodegradable resins and cellulose resins, paper materials, metal materials, and so forth.

For the configuration described above, it is preferable to use a preferably white or transparent resin.

Here, the "transparent" means that the light transmittance in the visible light region is 30% or more on average in the visible light region.

Next, the color development layer 10B will be explained.

The color development layer 10B may be made by using any one of the resins described for the substrate 10A together with an energy absorber selected from those disclosed in Japanese Patent No. 3889431, Japanese Patent No. 4215817, Japanese Patent No. 4329744, and Japanese Patent No. 4391286, such that 0.001 to 5 parts by weight of the energy absorber is contained with respect to 100 parts by weight of the resin.

Specifically, the energy absorber may be made by using at least one selected from the group consisting of carbon black, single metal, metal salt, metal hydroxide, metal oxide, metal sulfide, carbonate, and metal silicate.

Here, the single metal usable as the energy absorber may be exemplified by iron, zinc, tin, nickel, copper, silver, gold, and the like.

Further, the metal salt usable as the energy absorber may be exemplified by copper carbonate, nickel carbonate, manganese carbonate, cobalt carbonate, lanthanum carbonate, magnesium nitrate, manganese nitrate, iron nitrate, cadmium nitrate, zinc nitrate, cobalt nitrate, lead nitrate, nickel nitrate, copper nitrate, palladium nitrate, lanthanum nitrate, magnesium acetate, manganese acetate, cadmium acetate, zinc acetate, cobalt acetate, lead acetate, nickel acetate, copper acetate, palladium acetate, copper chloride, iron chloride, cobalt chloride, nickel chloride, silver chloride, zinc chloride, copper phosphate, iron phosphate, cobalt phosphate, copper pyrophosphate, copper sulfate, iron sulfate, cobalt sulfate, copper oxalate, iron oxalate, cobalt oxalate, copper benzoate, iron benzoate, cobalt benzoate, copper phosphonate having an aromatic ring, and the like.

Further, the metal hydroxide usable as the energy absorber may be exemplified by copper hydroxide, aluminum hydroxide, magnesium hydroxide, zinc hydroxide, antimony hydroxide, cobalt hydroxide, nickel hydroxide, iron hydroxide, lanthanum hydroxide, and the like. The metal oxide may be exemplified by zinc oxide, magnesium oxide, aluminum oxide, alumina, iron oxide, iron black, titanium oxide, silicon oxide, antimony trioxide, cobalt oxide, lead oxide, tin oxide, indium oxide, manganese oxide, molybdenum oxide, nickel oxide, copper oxide, palladium oxide, lanthanum oxide, antimony-doped tin oxide(ATO), indium-doped tin oxide (ITO), synthetic zeolite, natural zeolite, copper-molybdenum complex oxide (42-903A, made by Tokan Material Technology Co., Ltd.), and the like.

Further, the metal oxide usable as the energy absorber may be further exemplified by mica, montmorillonite, smectite, and the like, which have a layered structure.

Further, the metal sulfide usable as the energy absorber may be exemplified by zinc sulfide, cadmium sulfide, and the like.

Further, the carbonate usable as the energy absorber may be exemplified by calcium carbonate or the like. The metal silicate may be exemplified by alumina silicate, alumina silicate containing iron (mica), hydrous alumina silicate (kaolin), magnesium silicate (talc), calcium silicate, magnesium silicate, and the like.

Further, the energy absorber may be replaced by alternatively using a temperature indicating material, such as a leuco colorant, leuco pigment, or the like, that makes color development at a temperature above a certain threshold.

Specifically, a color development colorant may be used as the temperature indicating material, which may be exemplified by 3,3-bis(1-n-butyl-2-methyl-indole-3-yl)phthalide, 7-(1-butyl-2-methyl-1H-indole-3-yl)-7-(4-diethylamino-2-methyl-phenyl)-7H-furo[3,4-b]pyridine-5-one, 1-(2,4-dichloro-phenylcarbamoyl)-3,3-dimethyl-2-oxo-1-phenoxy-butyl-(4-diethyla mino-phenyl)-carbamate isobutyl ester, 3,3-bis(p-dimethylaminophenyl)phthalide, 3,3-bis(p-dimethylaminophenyl)-6-dimethylaminophthalide (an alias is crystal violet lactone = CVL), 3,3-bis(p-dimethylaminophenyl)-6-aminophthalide, 3,3-bis(p-dimethylaminophenyl)-6-nitrophthalide, 3,3-bis3-dimethylamino-7-methylfluoran, 3-diethylamino-7-chlorofluoran, 3-diethylamino-6-chloro-7-methylfluoran, 3-diethylamino-7-anilinofluoran, 3-diethylamino-6-methyl-7-anilinofluoran, 2-(2-fluorophenylamino)-6-diethylaminofluoran, 2-(2-fluorophenylamino)-6-di-n-butylaminofluoran, 3-piperidino-6-methyl-7-anilinofluoran, 3-(N-ethyl-p-toluidine)-7-(N-methylanilino)fluoran, 3-(N-ethyl-p-toluidine)-6-methyl-7-anilinofluoran, 3-N-ethyl-N-isoamylamino-6-methyl-7-anilinofluoran, 3-N-methyl-N-cyclohexylamino-6-methyl-7-anilinofluoran, 3-N,N-diethylamino-7-o-chloranilinofluoran, rhodamine B lactam, 3-methylspirodinaphthopyran, 3-ethylspirodinaphthopyran, 3-benzylspironaphthopyran, and the like.

Further, a color developer may be used as the temperature indicating material, which can be any acidic substance used as an electron acceptor in a thermosensitive recording body. The color developer may be exemplified by inorganic substances, such as activated clay and acid clay, inorganic acids, aromatic carboxylic acids, their anhydrides or metal salts thereof, organic color developers, such as organic sulfonic acids, other organic acids, and phenolic compounds, and the like. Of them, a phenolic compound is preferably used.

Specifically, the color developer may be exemplified by bis3-allyl-4-hydroxyphenylsulfone, polyhydroxystyrene, zinc salt of 3,5-di-t-butylsalicylic acid, zinc salt of 3-octyl-5-methylsalicylic acid, phenol, phenolic compounds, such as 4-phenylphenol, 4-hydroxyacetophenone, 2,2'-dihydroxydiphenyl, 2,2'-methylenebis(4-chlorophenol), 2,2'-methylenebis(4-methyl-6-t-butylphenol), 4,4'-isopropylidenediphenol(an alias is bisphenol A), 4,4'-isopropylidenebis(2-chlorophenol), 4,4'-isopropylidenebis(2-methylphenol), 4,4'-ethylenebis(2-methylphenol), 4,4'-thiobis(6-t-butyl-3-methylphenol), 1,1-bis(4-hydroxyphenyl)-cyclohexane, 2,2'-bis(4-hydroxyphenyl)-n-heptane, 4,4'-cyclohexylidenebis(2-isopropylphenol), and 4,4'-sulfonyldiphenol, salts of these phenolic compounds, salicylic acid anilide, novolac type phenol resins, p-hydroxybenzoate benzyl, and the like.

The protection layer 10C may be made by using polyethylene terephthalate (PET), polyvinyl chloride (PVC), polycarbonate (PC), polyester, and/or the like, which are generally used as a card material, paper material, and/or film material. Further, a material usable for the protection layer 10C, other than those described above, may be exemplified by paper materials and resin materials disclosed in Japanese Patent No. 3889431, Japanese Patent No. 4215817, Japanese Patent No. 4329744, and Japanese Patent No. 4391286. Specifically, the usable material may be exemplified by polyethylene terephthalate (A-PET, PETG), polycyclohexane 1,4-dimethyl phthalate(PCT), polystyrene (PS), polymethyl methacrylate (PMMA), transparent ABS (MABS), polypropylene (PP), polyethylene (PE), polyvinyl alcohol (PVA), styrene butadiene copolymer (SBR), acrylic resins, acrylic modified urethane resins, styrene/acrylic resins, ethylene/acrylic resins, urethane resins, rosin modified maleic acid resins, vinyl chloride/vinyl acetate copolymer, polyvinyl acetal resins, polyamide resins, cellulose resins, such as hydroxyethyl cellulose, hydroxypropyl cellulose, and nitrocellulose, polyolefin resins, polyamide resins, other resins, such as biodegradable resins and cellulose resins, paper materials, metal materials, and so forth.

Further, the protection layer 10C needs to allow the content recorded on the color development layer 10B to be visually recognized, and thus is preferably made by using a transparent resin. Here, the "transparent" means that the light transmittance in the visible light region is 30% or more on average in the visible light region.

Further, where the color development layer 10B present inside is made of a material that makes color development by a laser beam, the protection layer 10C needs to be made of a material that transmits light in the wavelength region of the laser beam to be used.

Specifically, this wavelength region covers a wavelength of 1,064 nm of a YAG or $YVO_4$ laser, and wavelengths of 532 nm, 355 nm, and 266 nm of its harmonic.

Further, where a semiconductor laser or the like is used, as the laser is not a single wavelength type, the protection layer 10C needs to be made of a material that transmits light within a certain range, such as a wavelength region of 700 to 1,200 nm.

As described above, according to the first non-claimed example or the modification of the first non-claimed example, when the positions of all the lines 13X observed from the front face 10S of the recording medium 10 agree with the positions of all the lines 13X observed from the end face 10X of the recording medium 10, it can be confirmed that the print face of the recording medium 10 has more likely not been subjected to falsification or tampering.

[2] First embodiment of the invention

The first non-claimed example described above relates to a case where the color development layer 10B is formed of a single layer. The first embodiment of the invention relates to a case where the color development layer 10B includes a plurality of color development layers different in color.

Fig. 5 is a detailed configuration explanatory diagram of a recording medium according to the first embodiment of the invention.

As the colors of the plurality of color development layers, for example, the three primary colors in printing, such as cyan (C), magenta (M), and yellow (Y), may be used. The overview of the print face according to the first embodiment of the invention is substantially the same as that of Fig. 1 according to the first non-claimed example, but a plurality of colors are observed in a cross-section of the medium as illustrated in Fig. 5. Hereinafter, heat, i.e., temperature, will be taken as an example of a form of energy to be input, for explanation.

First, an explanation will be given of the principle of the first embodiment of the invention.

In the recording medium 10 according to the first embodiment of the invention, when heat is generated at least on the protection layer 10C by irradiation with laser, and is conducted to the plurality of color development layers composing the color development layer 10B, the temperatures of the respective layers are changed. Here, the way of heat application by the laser is used to control such temperature changes of the layers, i.e., the irradiation conditions of the laser are used to control the temperatures of the plurality of color development layers, and thereby to control color development therein.

As illustrated in the round frame of Fig. 5, the recording medium 10 according to the first embodiment of the invention includes a substrate 10A, on which a low temperature color development layer 10BL, a first spacer layer 10BS1, a middle temperature color development layer 10BM, a second spacer layer 10BS2, a high temperature color development layer 10BH, a functional layer 10F, and a protection layer 10C are laminated in this order.

Here, the low temperature color development layer 10BL, the middle temperature color development layer 10BM, and the high temperature color development layer 10BH serve as thermosensitive recording layers for image recording, and the first spacer layer 10BS1 and the second spacer layer 10BS2 serve as intermediate layers for heat insulation and heat conduction.

In the configuration described above, the substrate 10A holds the low temperature color development layer 10BL, the first spacer layer 10BS1, the middle temperature color development layer 10BM, the second spacer layer 10BS2, the high temperature color development layer 10BH, the functional layer 10F, and the protection layer 10C.

The low temperature color development layer 10BL is a layer containing a temperature indicating material made of a thermosensitive material that makes color development when its temperature becomes a first threshold temperature Tl or more. The first threshold temperature Tl of the low temperature color development layer 10BL is set to a range of 60°C to 140°C, for example.

The first spacer layer 10BS1 is a layer that provides a thermal barrier when the low temperature color development layer 10BL is set in a non color development state, to suppress the heat conduction from the middle temperature color development layer 10BM side to the low temperature color development layer 10BL.

The middle temperature color development layer 10BM is a layer containing a temperature indicating material made of a thermosensitive material that makes color development when its temperature becomes a second threshold temperature Tm (>Tl) or more. The second threshold temperature Tm of the middle temperature color development layer 10BM is set to a range of 100°C to 200°C, for example.

The second spacer layer 10BS2 is a layer that provides a thermal barrier when the middle temperature color development layer 10BM is set in a non color development state, to suppress the heat conduction from the high temperature color development layer 10BH side to the middle temperature color development layer 10BM.

The high temperature color development layer 10BH is a layer containing a temperature indicating material made of a thermosensitive material that makes color development when its temperature becomes a third threshold temperature Th (>Tm) or more. The third threshold temperature Th of the high temperature color development layer 10BH is set to a range of 150°C to 270°C, for example.

The functional layer 10F is a layer provided in accordance with a necessary function. Specifically, the function of the functional layer 10F may be exemplified by insertion of a forgery prevention item, such as a hologram, lenticular lens, microarray lens, or ultraviolet excitation type fluorescent ink, insertion of an internal protection item, such as an ultraviolet cut layer, and insertion of both functions.

The protection layer 10C is a layer that protects the low temperature color development layer 10BL, the first spacer layer 10BS1, the middle temperature color development layer 10BM, the second spacer layer 10BS2, the high temperature color development layer 10BH, and the functional layer 10F.

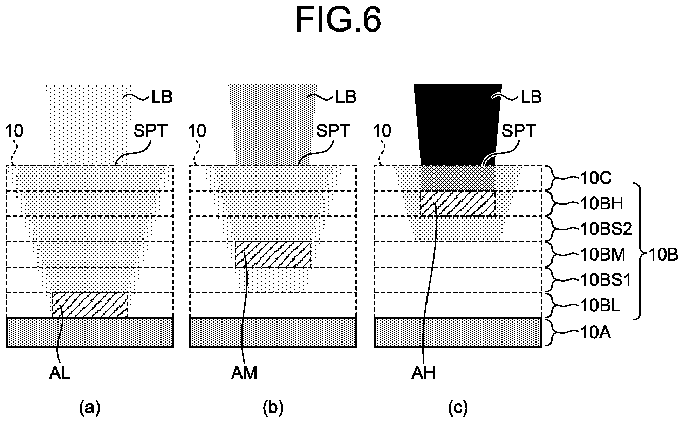

Figs. 6A to 6C are explanatory diagrams of the color development principle in monochromatic color development according to the first embodiment of the invention.

Here, Figs. 6A to 6C omit illustration of the functional layer 10F for ease of understanding.

Fig. 6A is an explanatory diagram of the principle in a case where the low temperature color development layer 10BL is individually caused to make color development.

Further, Fig. 6B is an explanatory diagram of the principle in a case where the middle temperature color development layer 10BM is individually caused to make color development.

Further, Fig. 6C is an explanatory diagram of the principle in a case where the high temperature color development layer 10BH is individually caused to make color development.

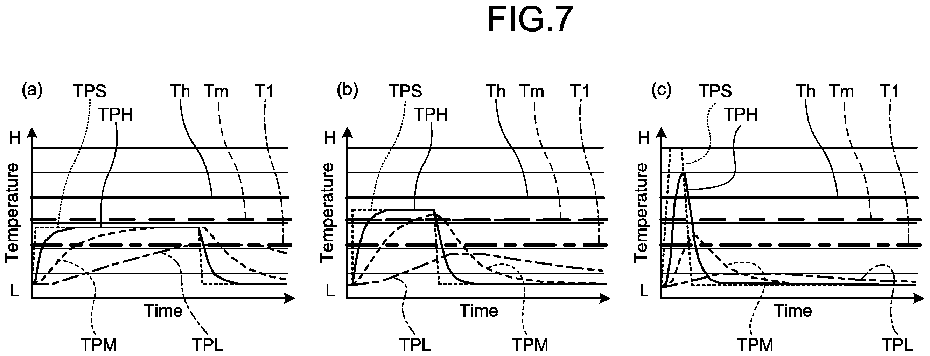

Figs. 7A to 7C are explanatory diagrams of temperature control in monochromatic color development according to the first embodiment of the invention.

Fig. 7A is an explanatory diagram of the temperature control in a case where the low temperature color development layer 10BL is individually caused to make color development. In Figs. 7A to 7C, the temperature of the front face 10S of the recording medium 10 is indicated by a temperature TPS.

Further, Fig. 7B is an explanatory diagram of the temperature control in a case where the middle temperature color development layer 10BM is individually caused to make color development.

Further, Fig. 7C is an explanatory diagram of the temperature control in a case where the high temperature color development layer 10BH is individually caused to make color development.

When only the low temperature color development layer 10BL is caused to make color development, it is necessary that heat be conducted from a laser irradiation position SPT to the low temperature color development layer 10BL, and the temperature TPL of the low temperature color development layer 10BL exceed the first threshold temperature Tl. In addition to this requirement, the laser irradiation conditions are set to further realize that the temperature TPM of the middle temperature color development layer 10BM is prevented from exceeding the second threshold temperature Tm, and the temperature TPH of the high temperature color development layer 10BH is prevented from exceeding the third threshold temperature Th. Accordingly, the recording in this case is performed under the laser irradiation conditions thus set, i.e., under the temperature control state illustrated in Fig. 7A.

As a result, as illustrated in Fig. 6A, the low temperature color development layer 10BL makes color development at its color development region AL.

Further, when only the middle temperature color development layer 10BM is caused to make color development, it is necessary that heat be conducted from the laser irradiation position SPT to the middle temperature color development layer 10BM, and the temperature TPM of the middle temperature color development layer 10BM exceed the second threshold temperature Tm. In addition to this requirement, the laser irradiation conditions are set to further realize that the temperature TPH of the high temperature color development layer 10BH is prevented from exceeding the third threshold temperature Th, and heat conduction is suppressed by the first spacer layer 10BS1, by which the temperature TPL of the low temperature color development layer 10BL is prevented from exceeding the first threshold temperature Tl. Accordingly, the recording in this case is performed under the laser irradiation conditions thus set, i.e., under the temperature control state illustrated in Fig. 7B.

As a result, as illustrated in Fig. 6B, the middle temperature color development layer 10BM makes color development at its color development region AM.

Further, when only the high temperature color development layer 10BH is caused to make color development, it is necessary that heat be conducted from the laser irradiation position SPT to the high temperature color development layer 10BH, and the temperature TPH of the high temperature color development layer 10BH exceed the third threshold temperature Th. In addition to this requirement, the laser irradiation conditions are set to further realize that heat conduction is suppressed by the second spacer layer 10BS2 and the first spacer layer 10BS1, by which the temperature of the middle temperature color development layer 10BM is prevented from exceeding the second threshold temperature Tm, and the temperature of the low temperature color development layer 10BL is prevented from exceeding the first threshold temperature Tl. Accordingly, the recording in this case is performed under the laser irradiation conditions thus set, i.e., under the temperature control state illustrated in Fig. 7C.

As a result, as illustrated in Fig. 6C, the high temperature color development layer 10BH makes color development at its color development region AH.

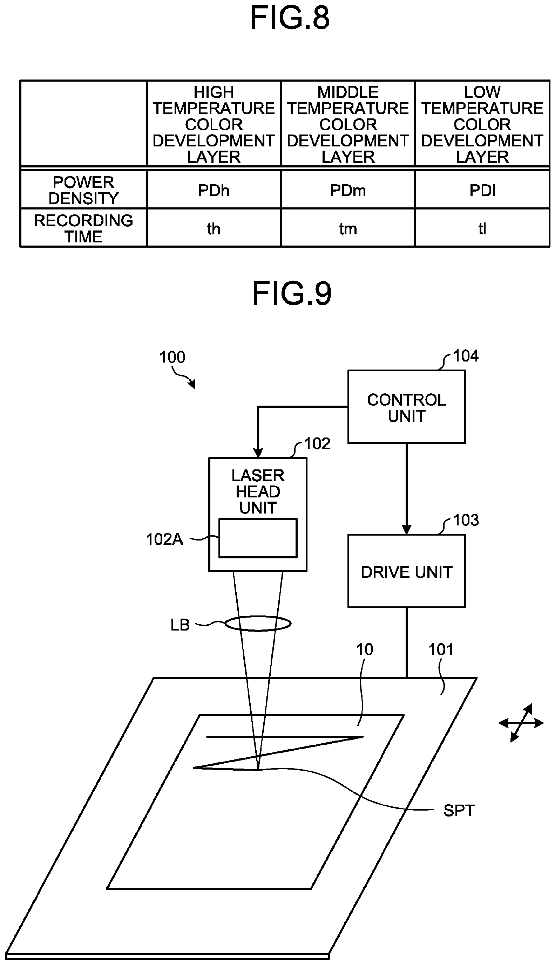

Fig. 8 is an explanatory diagram of an example of laser irradiation conditions.

As illustrated in Fig. 8, power densities PDl, PDm, and PDh and recording times tl, tm, and th denote the power densities and the recording times for causing the low temperature color development layer 10BL, the middle temperature color development layer 10BM, and the high temperature color development layer 10BH to make color development, respectively. In this case, these parameters are set to satisfy the following conditions.

$$PDl < PDm < PDh, \text{ and } th < tm < tl$$

In other words, the power densities are set as follows.

$$PDl + \alpha 1 = PDm + \alpha 2 = PDh \; (\alpha 1 > \alpha 2 > 0)$$

In this case, it is assumed that the values of $\alpha 1$ and $\alpha 2$ are appropriately set in advance in accordance with the materials composing the low temperature color development layer 10BL, the middle temperature color development layer 10BM, and the high temperature color development layer 10BH.

Further, also the recording times are set as follows.

$$th + \beta 1 = tm + \beta 2 = tl \; (\beta 1 > \beta 2 > 0)$$

In this case, it is assumed that the values of $\beta 1$ and $\beta 2$ are appropriately set in advance in accordance with the materials composing the low temperature color development layer 10BL, the middle temperature color development layer 10BM, and the high temperature color development layer 10BH.

Specifically, when the low temperature color development layer 10BL is selectively caused to make color development, the power density PDI is set as the smallest value relatively, and the recording time tl is set as the largest value relatively.

When laser beam irradiation is performed under the conditions described above, the temperature of the low temperature color development layer 10BL can exceed the first threshold temperature Tl, while, in the phase where heat is conducted to the high temperature color development layer 10BH and the middle temperature color development layer 10BM, the temperature of the middle temperature color development layer 10BM does not exceed the second threshold temperature Tm, and the temperature of the high temperature color development layer 10BH does not exceed the third threshold temperature Th.

Further, when the high temperature color development layer 10BH is selectively caused to make color development, the power density PDh is set as the largest value relatively, and the recording time th is set as the smallest value relatively. When laser beam irradiation is performed under the conditions described above, only the high temperature color development layer 10BH can exceed its threshold temperature, while, in the phase where heat is conducted to the middle temperature color development layer 10BM and the low temperature color development layer 10BL, the middle temperature color development layer 10BM does not exceed its threshold temperature, and the low temperature color development layer 10BL does not exceed its threshold temperature.

Further, when the middle temperature color development layer 10BM is selectively caused to make color development, the power density PDm and the recording time tm are set as intermediate values relatively, as described above.

When laser beam irradiation is performed under the conditions described above, only the middle temperature color development layer 10BM can exceed its threshold temperature, while, in the phase where heat is conducted to the high temperature color development layer 10BH and the low temperature color development layer 10BL, the high temperature color development layer 10BH does not exceed its threshold temperature, and the low temperature color development layer 10BL does not exceed its threshold temperature.

As described above, the respective layers corresponding to the three primary colors can be selectively caused to make color development, and thus full-color recording can be performed by combining the three primary colors. Further, in the method according to the second embodiment, the three primary colors can be recorded in a superimposed state in the lamination direction of the respective layers of the recording medium 10. Consequently, as compared with a case where the three primary colors are arranged separately along the two-dimensional plane, a well-looking image can be provided even by a relatively low resolution.

Next, an explanation will be given of a laser recording apparatus. Fig. 9 is a schematic configuration block diagram of a laser recording apparatus according to an embodiment.

The laser recording apparatus 100 includes a laser head unit 102 configured to emit a laser beam LB for recording to a recording medium 10 mounted on a recording stage 101, a drive unit 103 configured to drive the recording stage 101 to perform scanning effectively by the laser beam LB emitted from the laser head unit 102, and a control unit 104 formed of a microcomputer configured to control the laser head unit 102 and the drive unit 103 on the basis of recording image data input from outside.

In the configuration described above, the laser head unit 102 includes a spot control part 102A formed of an optical system configured to control the focus position of the laser beam LB and the spot diameter of the laser beam LB, under the control of the control unit 104.

Further, on the basis of a control program stored in advance, the control unit 104 controls the power density, irradiation time, focus position, spot diameter, and so forth of the laser beam LB to be emitted from the laser head unit 102, to cause a desired one or plurality of color development layers to make color development, among the low temperature color development layer 10BL, the middle temperature color development layer 10BM, and the high temperature color development layer 10BH.

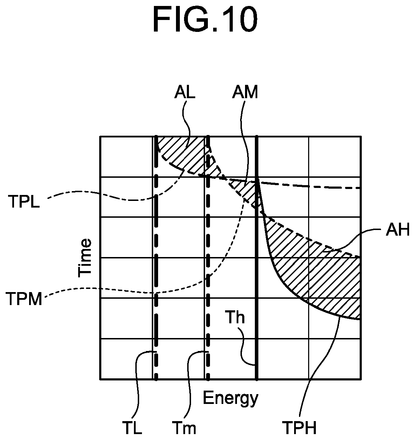

Fig. 10 is an explanatory diagram of the relation between an energy amount and an input time for each color development layer to make color development alone.

As illustrated in Fig. 10, a region AL indicates a region that satisfies the energy amount and the input time for causing the low temperature color development layer 10BL to make color development alone. A region AM indicates a region that satisfies the energy amount and the input time for causing the middle temperature color development layer 10BM to make color development alone. A region AH indicates a region that satisfies the energy amount and the input time for causing the high temperature color development layer 10BH to make color development alone.

Also in the first embodiment of the invention, for the purpose of improving the falsification preventing effect and the accuracy of authenticity determination, it is possible to perform coding to embed specific information by changing the arrangement of lines 13X extending up to the end face 10X of the recording medium 10, and/or by changing the color development layers to be caused to make color development, for every medium.

Next, an explanation will be given of code assignment, by taking four aspects as examples. However, without being limited to these four aspects, various aspects of assignment are possible.

[2.1] First Aspect

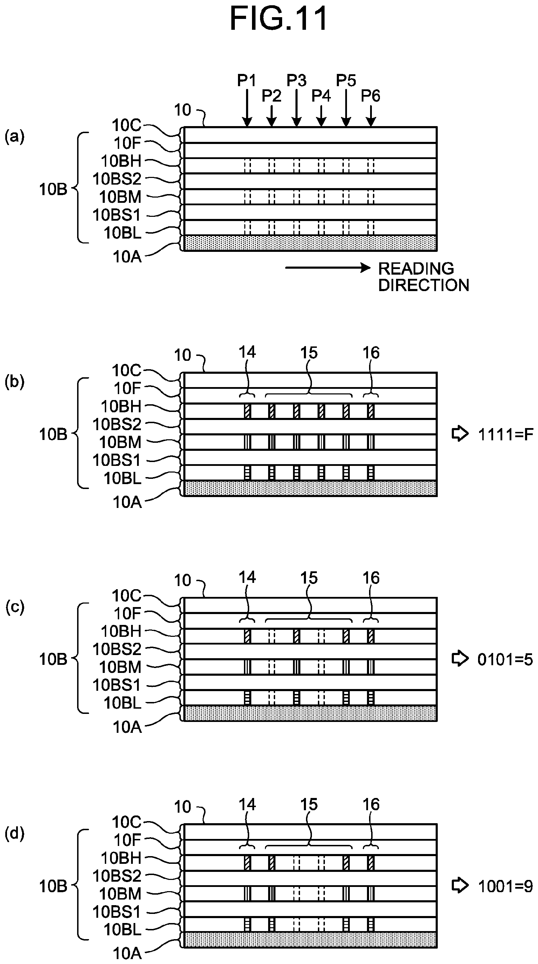

Figs. 11A to 11D are explanatory views of code assignment according to a first aspect of the first embodiment of the invention.

Each of Figs. 11A to 11D illustrates a partially enlarged explanatory view of a recording medium subjected to code assignment according to the first aspect of the first embodiment of the invention, as seen from its end face.

As illustrated in Fig. 11A, information recording positions P1 to P6 at six positions, for example, are set in each of the low temperature color development layer 10BL, the middle temperature color development layer 10BM, and the high temperature color development layer 10BH of the recording medium 10.

Here, as illustrated in Figs. 11B to 11D, the information recording position P1 serves as the recording position of a start flag 14 that indicates the record starting position of information. The information recording position P6 serves as the recording position of an end flag 16 that indicates the record ending position of the information.

Further, the four information recording positions P2 to P5 serve as information recording positions that can each record information of one bit, and thus record a code expressed by four bits as a whole.

In the code assignment according to the first aspect, information code reading is performed in a direction from left to right as illustrated in Fig. 11A.

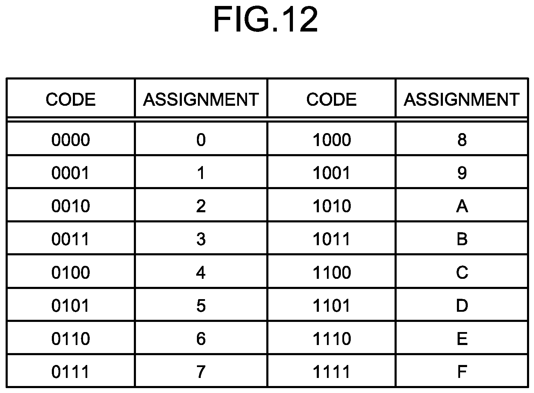

Fig. 12 is an explanatory diagram of a correlation table of an information record example in the code assignment according to the first aspect of the first embodiment of the invention.

In the first aspect, in each of the low temperature color development layer 10BL, the middle temperature color development layer 10BM, and the high temperature color development layer 10BH of the recording medium 10, any one of 16 codes (0 to F in hexadecimal), each expressed by four bits, can be recorded at the information recording positions P2 to P5 as an information code 15, and the cords in the respective layers correspond to the same code. In other words, in the first aspect, a single code is recorded as a whole in the low temperature color development layer 10BL, the middle temperature color development layer 10BM, and the high temperature color development layer 10BH of the recording medium 10.

Here, for example, in the example illustrated in Fig. 11B, in common to all the low temperature color development layer 10BL, the middle temperature color development layer 10BM, and the high temperature color development layer 10BH, the information recording position P2 has a line, the information recording position P3 has a line, the information recording position P4 has a line, and the information recording position P5 has a line, so that the information code 15 = "1111" stands. Thus, it can be seen that the value of the information code 15 recorded here is "F" from the table of Fig. 12.

Similarly, in the example illustrated in Fig. 11C, in common to all the low temperature color development layer 10BL, the middle temperature color development layer 10BM, and the high temperature color development layer 10BH, the information recording position P2 has no line, the information recording position P3 has a line, the information recording position P4 has no line, and the information recording position P5 has a line, so that the information code 15 = "0101" stands. Thus, it can be seen that the value of the information code 15 recorded here is "5" from the table of Fig. 12.

Further, in the example illustrated in Fig. 11D, in common to all the low temperature color development layer 10BL, the middle temperature color development layer 10BM, and the high temperature color development layer 10BH, the information recording position P2 has a line, the information recording position P3 has no line, the information recording position P4 has no line, and the information recording position P5 has a line, so that the information code 15 = "1001" stands. Thus, it can be seen that the value of the information code 15 recorded here is "9" from the table of Fig. 12.

In the case described above, information of four bits is used. However, as the specific information, for example, an ID number ("12345678" in the example of Fig. 1) that can specify the owner of the recording medium 10 may be recorded, as in the first non-claimed example.

In this case, the start flag 14 and the end flag 16 only need to serve as marks for indicating embedment of the information code 15 between the flags, and thus may be formed with any color (single color or mixed color) as long as the drawing of lines can be recognized.

Here, in the examples of Figs. 11A to 11D, when the information code 15 is observed from the front face 10S of the recording medium 10, the code 15 is visually recognized as lines of black color (K) due to color mixing of cyan (C), magenta (M), and yellow (Y). However, when the information code 15 is observed from the end face 10X of the recording medium 10, the code 15 is visually recognized in a state where cyan (C), magenta (M), and yellow (Y) make color development separately from each other.

[2.2] Second Aspect

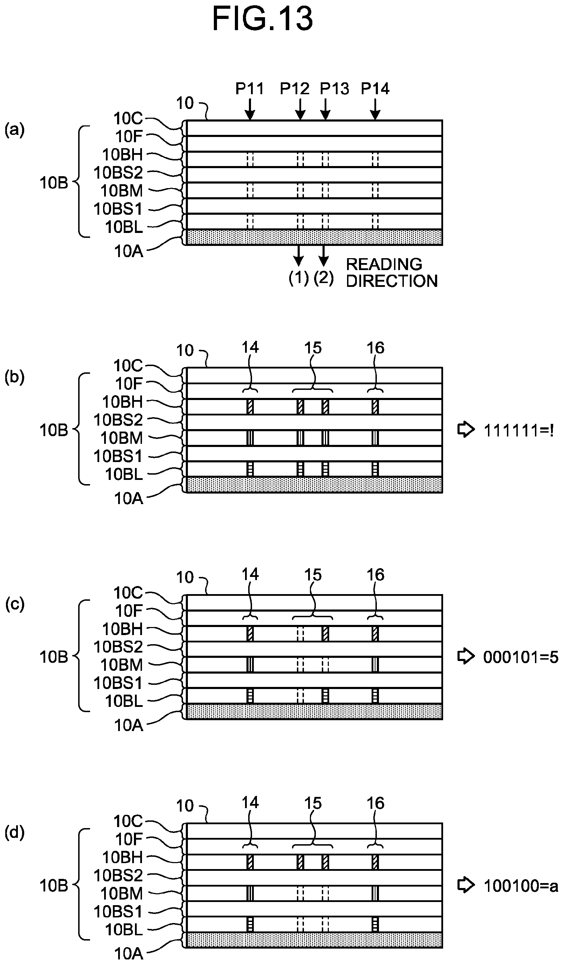

Figs. 13A to 13D are explanatory views of code assignment according to a second aspect of the first embodiment of the invention.

Each of Figs. 13A to 13D illustrates a partially enlarged explanatory view of a recording medium subjected to code assignment according to the second aspect of the first embodiment of the invention, as seen from its end face.

As illustrated in Fig. 13A, information recording positions P11 to P14 at four positions, for example, are set in each of the low temperature color development layer 10BL, the middle temperature color development layer 10BM, and the high temperature color development layer 10BH of the recording medium 10.

Here, as illustrated in Figs. 13B to 13D, the information recording position P11 serves as the recording position of a start flag 14 that indicates the record starting position of information. The information recording position P14 serves as the recording position of an end flag 16 that indicates the record ending position of the information.

Further, the two sets of information recording positions P12 and P13 serve as information recording positions that can each record information of three bits, and thus record a code expressed by six bits as a whole.

In the code assignment according to the second aspect, information code reading is performed as illustrated in Fig. 13A, which is as follows. First, reading is performed to the information recording positions P12 in a direction from top to bottom, as in the order of the high temperature color development layer 10BH, to the middle temperature color development layer 10BM, and to the low temperature color development layer 10BL. Then, reading is performed to the information recording positions P13 in a direction from top to bottom, as in the order of the high temperature color development layer 10BH, to the middle temperature color development layer 10BM, and to the low temperature color development layer 10BL.

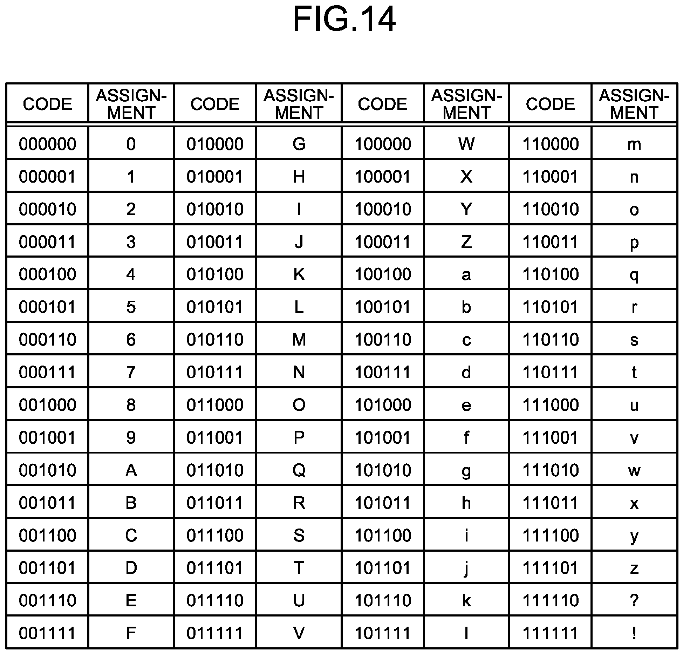

Fig. 14 is an explanatory diagram of a correlation table of an information record example in the code assignment according to the second aspect of the first embodiment of the invention.

Here, for example, in the example illustrated in Fig. 13B, the information recording position P12 of the high temperature color development layer 10BH has a line, the information recording position P12 of the middle temperature color development layer 10BM has a line, the information recording position P12 of the low temperature color development layer 10BL has a line, the information recording position P13 of the high temperature color development layer 10BH has a line, the information recording position P13 of the middle temperature color development layer 10BM has a line, and the information recording position P13 of the low temperature color development layer 10BL has a line, so that the information code 15 = "111111" stands. Thus, it can be seen that the value of the information code 15 recorded here is "!" from the table of Fig. 14.

Similarly, in the example illustrated in Fig. 13C, the information recording position P12 of the high temperature color development layer 10BH has no line, the information recording position P12 of the middle temperature color development layer 10BM has no line, the information recording position P12 of the low temperature color development layer 10BL has no line, the information recording position P13 of the high temperature color development layer 10BH has a line, the information recording position P13 of the middle temperature color development layer 10BM has no line, and the information recording position P13 of the low temperature color development layer 10BL has a line, so that the information code 15 = "000101" stands. Thus, it can be seen that the value of the information code 15 recorded here is "5" from the table of Fig. 14.

Similarly, in the example illustrated in Fig. 13D, the information recording position P12 of the high temperature color development layer 10BH has a line, the information recording position P12 of the middle temperature color development layer 10BM has no line, the information recording position P12 of the low temperature color development layer 10BL has no line, the information recording position P13 of the high temperature color development layer 10BH has a line, the information recording position P13 of the middle temperature color development layer 10BM has no line, and the information recording position P13 of the low temperature color development layer 10BL has no line, so that the information code 15 = "100100" stands. Thus, it can be seen that the value of the information code 15 recorded here is "a" from the table of Fig. 14.

[2.3] Third Aspect

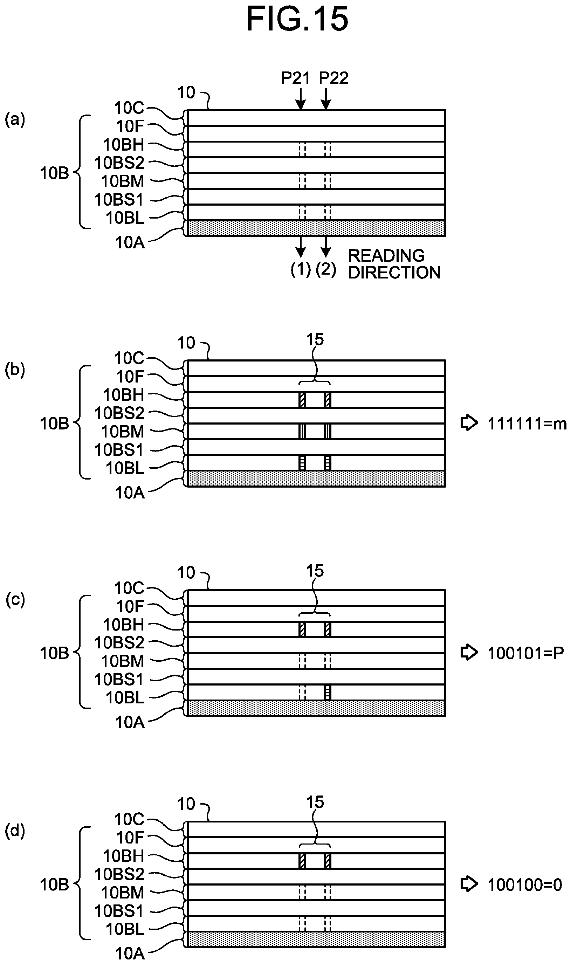

Figs. 15A to 15D are explanatory views of code assignment according to a third aspect of the first embodiment of the invention.

The third aspect differs in that the third aspect does not use the start flag 14 and the end flag 16 used in the first aspect and the second aspect.

Each of Figs. 15A to 15D illustrates a partially enlarged explanatory view of a recording medium subjected to code assignment according to the third aspect of the first embodiment of the invention, as seen from its end face.

As illustrated in Fig. 15A, information recording positions P21 and P22 at two positions, for example, are set in each of the low temperature color development layer 10BL, the middle temperature color development layer 10BM, and the high temperature color development layer 10BH of the recording medium 10. The two set of information recording positions P21 and P22 serve as information recording positions that can each record information of three bits, and thus record a code expressed by six bits as a whole.

In the code assignment according to the third aspect, information code reading is performed as illustrated in Fig. 15A, which is as follows. First, reading is performed to the information recording positions P21 in a direction from top to bottom, as in the order of the high temperature color development layer 10BH, to the middle temperature color development layer 10BM, and to the low temperature color development layer 10BL. Then, reading is performed to the information recording positions P22 in a direction from top to bottom, as in the order of the high temperature color development layer 10BH, to the middle temperature color development layer 10BM, and to the low temperature color development layer 10BL.

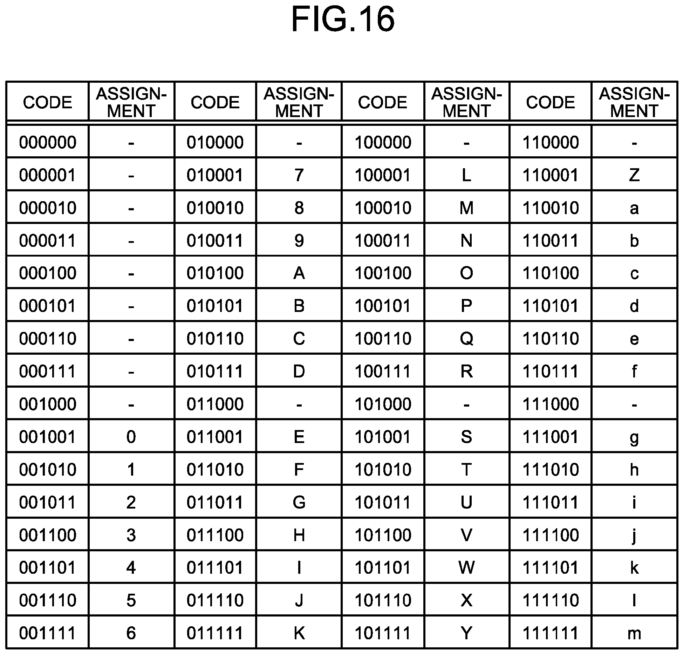

Fig. 16 is an explanatory diagram of a correlation table of an information record example in the code assignment according to the third aspect of the first embodiment of the invention.

Here, for example, in the example illustrated in Fig. 15B, the information recording position P21 of the high temperature color development layer 10BH has a line, the information recording position P21 of the middle temperature color development layer 10BM has a line, the information recording position P21 of the low temperature color development layer 10BL has a line, the information recording position P22 of the high temperature color development layer 10BH has a line, the information recording position P22 of the middle temperature color development layer 10BM has a line, and the information recording position P22 of the low temperature color development layer 10BL has a line, so that the information code 15 = "111111" stands. Thus, it can be seen that the value of the information code 15 recorded here is "m" from the table of Fig. 16.

Similarly, in the example illustrated in Fig. 15C, the information recording position P21 of the high temperature color development layer 10BH has a line, the information recording position P21 of the middle temperature color development layer 10BM has no line, the information recording position P21 of the low temperature color development layer 10BL has no line, the information recording position P22 of the high temperature color development layer 10BH has a line, the information recording position P22 of the middle temperature color development layer 10BM has no line, and the information recording position P22 of the low temperature color development layer 10BL has a line, so that the information code 15 = "100101" stands. Thus, it can be seen that the value of the information code 15 recorded here is "P" from the table of Fig. 16.

Similarly, in the example illustrated in Fig. 15D, the information recording position P21 of the high temperature color development layer 10BH has a line, the information recording position P21 of the middle temperature color development layer 10BM has no line, the information recording position P21 of the low temperature color development layer 10BL has no line, the information recording position P22 of the high temperature color development layer 10BH has a line, the information recording position P22 of the middle temperature color development layer 10BM has no line, and the information recording position P22 of the low temperature color development layer 10BL has no line, so that the information code 15 = "100100" stands. Thus, it can be seen that the value of the information code 15 recorded here is "O" from the table of Fig. 16.

[2.4] Fourth Aspect

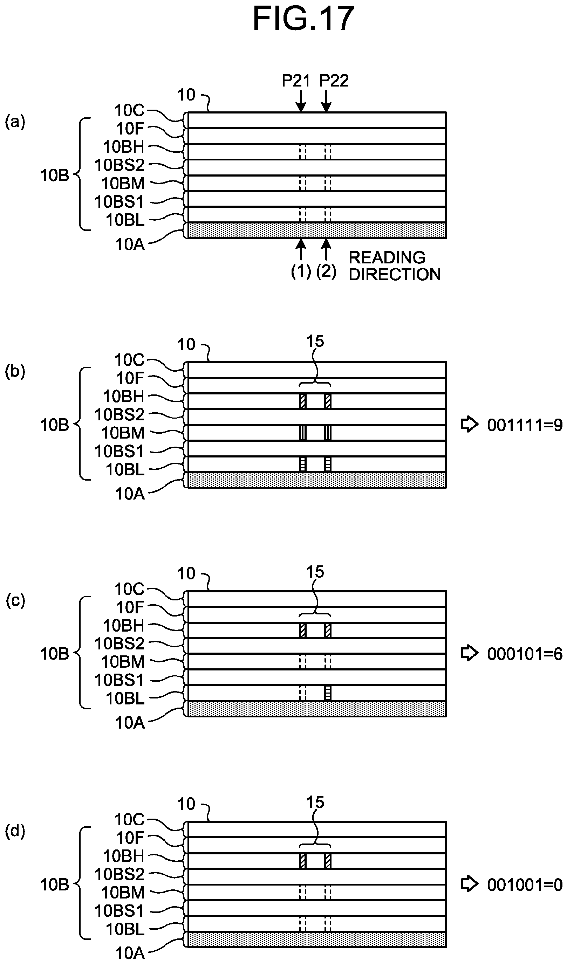

Figs. 17A to 17D are explanatory views of code assignment according to a fourth aspect of the first embodiment of the invention.

The fourth aspect also does not use the start flag 14 and the end flag 16, as in the third aspect.

Each of Figs. 17A to 17D illustrates a partially enlarged explanatory view of a recording medium subjected to code assignment according to the fourth aspect of the first embodiment of the invention, as seen from its end face.

As illustrated in Fig. 17A, information recording positions P21 and P22 at two positions, for example, are set in each of the low temperature color development layer 10BL, the middle temperature color development layer 10BM, and the high temperature color development layer 10BH of the recording medium 10. The two set of information recording positions P21 and P22 serve as information recording positions that can each record information of three bits, and thus record a code expressed by six bits as a whole.

In the code assignment according to the fourth aspect, information code reading is performed as illustrated in Fig. 17A, which is as follows. First, reading is performed to the information recording positions P21 in a direction from bottom to top, as in the order of the low temperature color development layer 10BL, to the middle temperature color development layer 10BM, and to the high temperature color development layer 10BH. Then, reading is performed to the information recording positions P22 in a direction from bottom to top, as in the order of the low temperature color development layer 10BL, to the middle temperature color development layer 10BM, and to the high temperature color development layer 10BH.

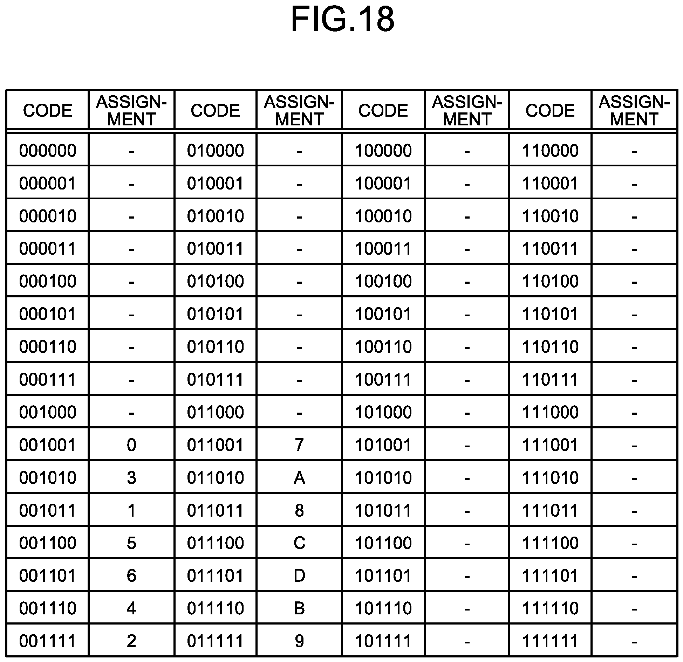

Fig. 18 is an explanatory diagram of a correlation table of an information record example in the code assignment according to the fourth aspect of the first embodiment of the invention.

Here, for example, in the example illustrated in Fig. 17B, the information recording position P21 of the low temperature color development layer 10BL has no line, the information recording position P21 of the middle temperature color development layer 10BM has a line, the information recording position P21 of the high temperature color development layer 10BH has a line, the information recording position P22 of the low temperature color development layer 10BL has a line, the information recording position P22 of the middle temperature color development layer 10BM has a line, and the information recording position P22 of the high temperature color development layer 10BH has a line, so that the information code 15 = "011111" stands. Thus, it can be seen that the value of the information code 15 recorded here is "9" from the table of Fig. 18.

Similarly, in the example illustrated in Fig. 17C, the information recording position P21 of the low temperature color development layer 10BL has no line, the information recording position P21 of the middle temperature color development layer 10BM has no line, the information recording position P21 of the high temperature color development layer 10BH has a line, the information recording position P22 of the low temperature color development layer 10BL has a line, the information recording position P22 of the middle temperature color development layer 10BM has no line, and the information recording position P22 of the high temperature color development layer 10BH has a line, so that the information code 15 = "001101" stands. Thus, it can be seen that the value of the information code 15 recorded here is "6" from the table of Fig. 18.

Similarly, in the example illustrated in Fig. 17D, the information recording position P21 of the low temperature color development layer 10BL has no line, the information recording position P21 of the middle temperature color development layer 10BM has no line, the information recording position P21 of the high temperature color development layer 10BH has a line, the information recording position P22 of the low temperature color development layer 10BL has no line, the information recording position P22 of the middle temperature color development layer 10BM has no line, and the information recording position P22 of the high temperature color development layer 10BH has a line, so that the information code 15 = "001001" stands. Thus, it can be seen that the value of the information code 15 recorded here is "0" from the table of Fig. 18.

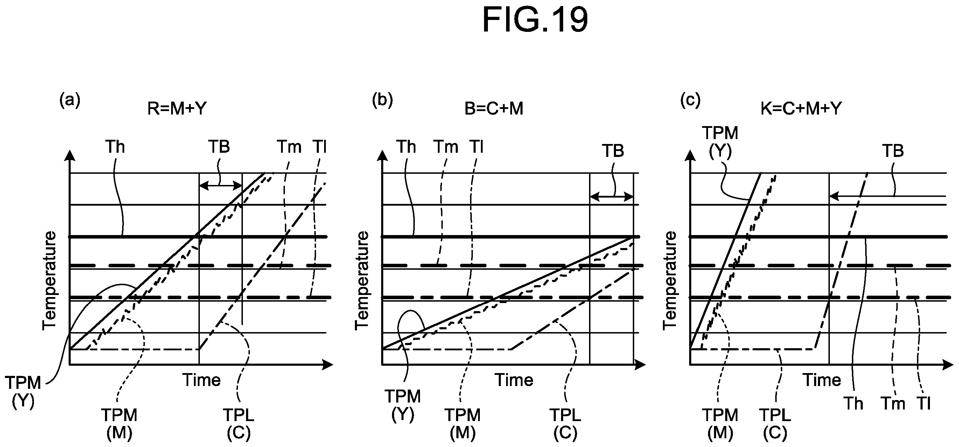

Figs. 19A to 19C are explanatory diagrams (part 1) of temperature control in color mixing color development according to the first embodiment of the invention.

In this case, it is assumed that the low temperature color development layer 10BL serves as a color development layer of cyan (C), the middle temperature color development layer 10BM serves as a color development layer of magenta (M), and the high temperature color development layer 10BH serves as a color development layer of yellow (Y).

Fig. 19A is an explanatory diagram of temperature control in a case where the middle temperature color development layer 10BM serving as a color development layer of magenta (M) and the high temperature color development layer 10BH serving as a color development layer of yellow (Y) are caused to make color development, so as to obtain color development of red (R).

Fig. 19B is an explanatory diagram of temperature control in a case where the low temperature color development layer 10BL serving as a color development layer of cyan (C) and the middle temperature color development layer 10BM serving as a color development layer of magenta (M) are caused to make color development, so as to obtain color development of blue (B).

Fig. 19C is an explanatory diagram of temperature control in a case where the low temperature color development layer 10BL serving as a color development layer of cyan (C), the middle temperature color development layer 10BM serving as a color development layer of magenta (M), and the high temperature color development layer 10BH serving as a color development layer of yellow (Y) are caused to make color development, so as to obtain color development of black (K).

It is assumed that the middle temperature color development layer 10BM serving as a color development layer of magenta (M) and the high temperature color development layer 10BH serving as a color development layer of yellow (Y) are caused to make color development, so as to obtain color development of red (R). In this case, the laser irradiation conditions are set to realize that the temperature TPL of the low temperature color development layer 10BL is prevented from exceeding the first threshold temperature Tl, while the temperature TPM of the middle temperature color development layer 10BM exceeds the second threshold temperature Tm, and the temperature TPH of the high temperature color development layer 10BH exceeds the third threshold temperature Th. Accordingly, the recording in this case is performed under the laser irradiation conditions thus set, i.e., under a temperature control state where the laser irradiation time (horizontal axis) falls within a time zone TB as illustrated in Fig. 9A.

As a result, the middle temperature color development layer 10BM serving as a color development layer of magenta (M) and the high temperature color development layer 10BH serving as a color development layer of yellow (Y) are caused to make color development, and color development of red (R) can thereby be obtained.

Further, it is assumed that the low temperature color development layer 10BL serving as a color development layer of cyan (C) and the middle temperature color development layer 10BM serving as a color development layer of magenta (M) are caused to make color development, so as to obtain color development of blue (B). In this case, it is necessary that heat be conducted from the laser irradiation position to the low temperature color development layer 10BL, by which the temperature TPL of the low temperature color development layer 10BL exceed the first threshold temperature Tl, and the temperature TPM of the middle temperature color development layer 10BM exceed the second threshold temperature Tm. In addition to this requirement, the laser irradiation conditions are set to further realize that the temperature TPH of the high temperature color development layer 10BH is prevented from exceeding the third threshold temperature Th. Accordingly, the recording in this case is performed under the laser irradiation conditions thus set, i.e., under a temperature control state where the laser irradiation time (horizontal axis) falls within a time zone TB as illustrated in Fig. 19B.

As a result, the low temperature color development layer 10BL serving as a color development layer of cyan (C) and the middle temperature color development layer 10BM serving as a color development layer of magenta (M) are caused to make color development, and color development of blue (B) can thereby be obtained.

Further, it is assumed that the low temperature color development layer 10BL serving as a color development layer of cyan (C), the middle temperature color development layer 10BM serving as a color development layer of magenta (M), and the high temperature color development layer 10BH serving as a color development layer of yellow (Y) are caused to make color development, so as to obtain color development of black (K). In this case, the laser irradiation conditions are set to realize that heat is conducted from the laser irradiation position to the low temperature color development layer 10BL, by which the temperature TPL of the low temperature color development layer 10BL exceeds the first threshold temperature Tl, the temperature TPM of the middle temperature color development layer 10BM exceeds the second threshold temperature Tm, and the temperature TPH of the high temperature color development layer 10BH exceeds the third threshold temperature Th. Accordingly, the recording in this case is performed under the laser irradiation conditions thus set, i.e., under a temperature control state where the laser irradiation time (horizontal axis) falls within a time zone TB as illustrated in Fig. 19C.

As a result, as illustrated in Fig. 19C, the low temperature color development layer 10BL serving as a color development layer of cyan (C), the middle temperature color development layer 10BM serving as a color development layer of magenta (M), and the high temperature color development layer 10BH serving as a color development layer of yellow (Y) are caused to make color development, and color development of black (K) can thereby be obtained.

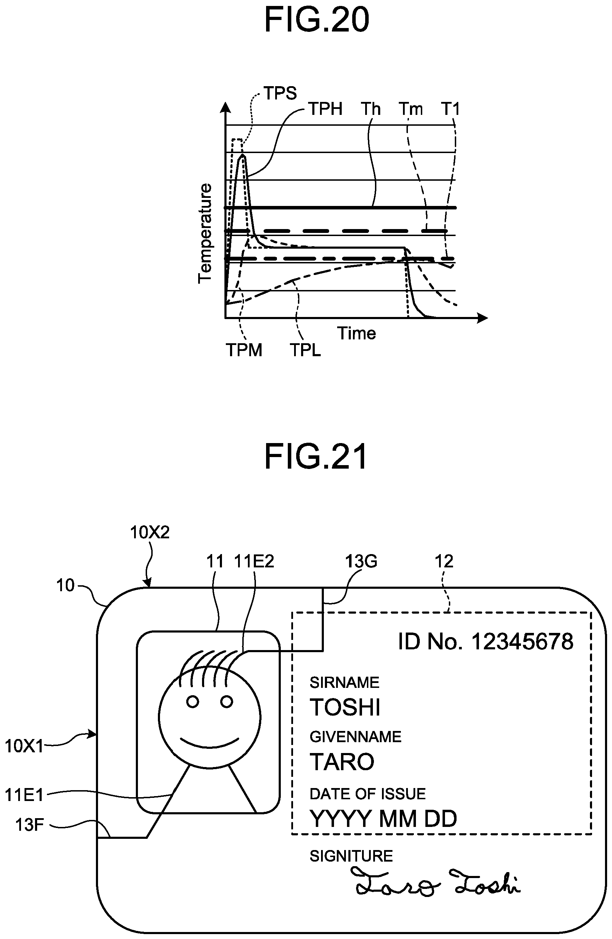

Fig. 20 is an explanatory diagram (part 2) of temperature control in color mixing color development according to the first embodiment of the invention.

Fig. 20 is an explanatory diagram of temperature control in a case where the low temperature color development layer 10BL serving as a color development layer of cyan (C) and the high temperature color development layer 10BH serving as a color development layer of yellow (Y), which are arranged by interposing therebetween the middle temperature color development layer 10BM serving as a color development layer of magenta (M), are caused to make color development, so as to obtain color development of green (G).

In this case, as illustrated in Fig. 20, the temperature of the high temperature color development layer 10BH is first raised at once to make color development of yellow (Y), and then, in a state where the temperature of the middle temperature color development layer 10BM has become lower to some extent, the low temperature color development layer 10BL is caused to make color development alone by the temperature control as illustrated in Fig. 7A. Consequently, color development of green (G) can be obtained.

[3] Second example

Next, an explanation will be given of a second example that differs from the first non-claimed example in relation to a state of a line extending up to the end face 10X of a recording medium.

Fig. 21 is a detailed configuration explanatory diagram of a recording medium according to the third embodiment.

In the first non-claimed example, as illustrated in Fig. 2, the lines 13A to 13E extending up to the end face 10X of a recording medium 10 are formed of extensions of lines composing the image background part 11A in the image formation region 11 of the recording medium 10. In the second example, as illustrated in Fig. 21, an edge portion of an image recorded in the image formation region 11 of the recording medium 10 is used for this purpose. For example, in the case of Fig. 21, an edge portion 11E1 corresponding to the border line between the subject's clothes and the background, and/or the subject's hair detected as an edge portion 11E2 are used. From the edge portion 11E1 or 11E2, a line 13F or 13G (this line is formed of a single line or a plurality of lines) having a color the same as that of the corresponding edge portion is formed as an extension up to the end face 10X1 or 10X2 of the recording medium 10.

Here, in the case of an identification paper, such as an ID card, the edge portion means a characteristic portion of the image, for example, a high contrast portion, such as the upper or lower end of the face, the end of the clothes or hair, or the face contour, in a face photo. Where a differential image is created on the base of brightness data obtained by gray-scaling an image to be recorded, the high contrast portion means a portion having a relatively large change rate of brightness in the differential image.

With the configuration described above, the extending positions of the lines 13F and 13G respectively extending up to the end faces 10X1 and 10X2 of the recording medium 10 vary depending on the image recorded in the image formation region 11. In this case, in order to make falsification, such as replacement of the image, on the print face on the recording medium 10, it is necessary to perform two-dimensional positioning. Thus, the falsification resistance is improved.

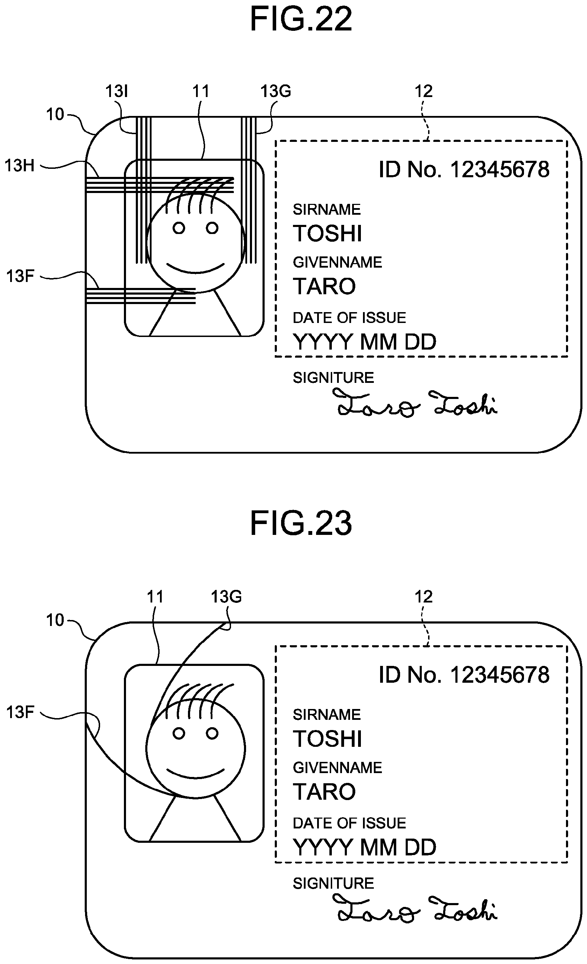

Fig. 22 is another detailed configuration explanatory diagram of a recording medium according to the second example.

As illustrated in Fig. 22, extension lines 13F, 13G, 13H, and 13I may be arranged in both the longitudinal direction and the lateral direction of the recording medium 10, i.e., may extend up to both the end faces 10X1 and 10X2 of the recording medium 10.

With this configuration, in order to make falsification, such as replacement of the image, it is necessary to perform two-dimensional positioning. Thus, the falsification resistance is improved.

Fig. 23 is still another detailed configuration explanatory diagram of a recording medium according to the second example,

In general, a high contrast edge portion, such as a face contour, is formed of a curved line in many cases. Accordingly, a line extending up to the end face 10X1 or 10X2 of the recording medium 10 may be formed of a curved line in accordance with the shape of the edge portion, as illustrated in Fig. 23.

The positional relation between the eyes, the lips, or the like on a facial image is information important to recognize the identical person; therefore, recording extension lines at positions indirectly indicating the positions of such feature points is effective to prevent forgery, such as replacement of photos.

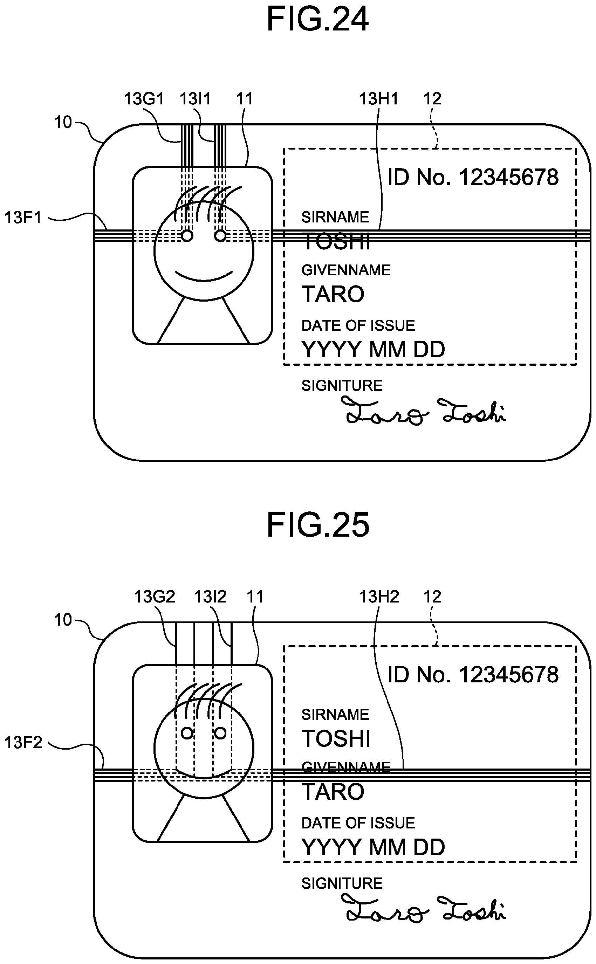

Fig. 24 is still another detailed configuration explanatory diagram of a recording medium according to the second example.

Fig. 24 illustrates an example where lines extending from positions of the eyes (or line groups each including a plurality of lines) 13F1, 13G1, 13H1, and 1311 extend in both the longitudinal direction and the lateral direction of the recording medium 10, i.e., extend up to both the end faces 10X1 and 10X2 of the recording medium 10.

With such a configuration, the lines 13F1 and 13G1 intersect at the position of the right eye on the facial image; and the lines 13H1 and 13I1 intersect at the position of the left eye on the facial image.

When the photos of the facial images are replaced in forgery, the eyes are not at the positions indicated by the lines 13F1, 13G1, 13H1, and 13I1; therefore, the forgery can be confirmed easily.

Fig. 25 is still another detailed configuration explanatory diagram of a recording medium according to the second example.

Fig. 25 illustrates an example where lines extending from positions of the lips (or line groups each including a plurality of lines) 13F2, 13G2, 13H2, and 13I2 extend in both the longitudinal direction and the lateral direction of the recording medium 10, i.e., extend up to both the end faces 10X1 and 10X2 of the recording medium 10.

With such a configuration, the lines 13F2 and 13G2 intersect at a position of the lips that can be seen when viewing the lips on the facial image from the right side of the face; and the lines 13H2 and 13I2 intersect at a position of the lips that can be seen when viewing the lips on the facial image from the left side of the face.

Similar to the example as illustrated in Fig. 24, when the photos of the facial images are replaced in forgery, the lips are not at the positions indicated by the lines 13F2, 13G2, 13H2, and 13I2; therefore, the forgery can be confirmed easily.

Although the feature points (eyes, lips, etc.) are used individually in the explanations above, it is allowable to use, for the same recording medium 10, a plurality of feature points in combination.

As described above, according to the second example, the extending positions of the lines 13F, 13G, 13F1, 13G1, 13H1, 13I1, 13F2, 13G2, 13H2, and 13I2 each extending up to the end face 10X1 or 10X2 of the recording medium 10 vary depending on the image recorded in the image formation region 11. Thus, it becomes more difficult to make falsification or tampering to the print face of the recording medium 10.

[4] Second embodiment of the invention

In each of some embodiments described above, the color development layers are composed of three color development layers, which are the low temperature color development layer 10BL for making color development of cyan (C), the middle temperature color development layer 10BM for making color development of magenta (M), and the high temperature color development layer 10BH for making color development of yellow (Y). The second embodiment of the invention relates to a case using a recording medium that includes, in addition to the three color development layers, a ultra-low temperature color development layer 10BLL for making color development of black (K).

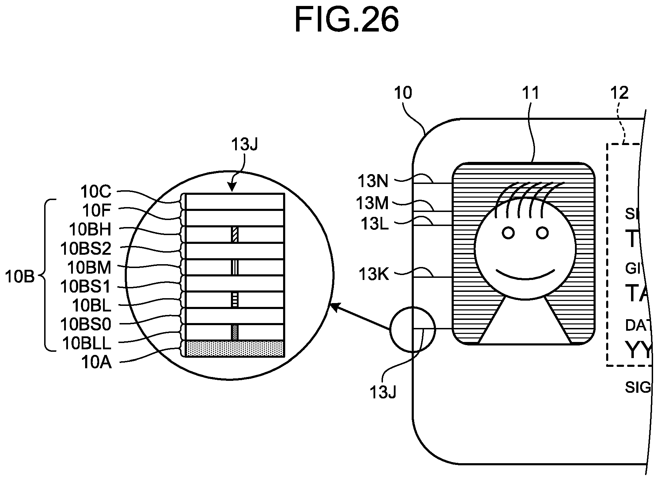

Fig. 26 is a detailed configuration explanatory diagram of a recording medium according to the second embodiment of the invention.

Also in the recording medium according to the second embodiment of the invention, when heat is generated at least on the protection layer 10C by irradiation with laser, and is conducted to the plurality of color development layers composing the color development layer 10B, the temperatures of the respective layers are changed. Here, the way of heat application by the laser is used to control such temperature changes of the layers, i.e., the irradiation conditions of the laser are used to control the temperatures of the plurality of color development layers, and thereby to control color development therein.

As illustrated in the round frame of Fig. 26, the recording medium 10 according to the second embodiment of the invention includes a substrate 10A, on which a ultra-low temperature color development layer 10BLL, a 0th spacer layer 10BSO, a low temperature color development layer 10BL, a first spacer layer 10BS1, a middle temperature color development layer 10BM, a second spacer layer 10BS2, a high temperature color development layer 10BH, a functional layer 10F, and a protection layer 10C are laminated in this order. Further, a line 13J is recorded by these layers.

Here, the ultra-low temperature color development layer 10BLL, the low temperature color development layer 10BL, the middle temperature color development layer 10BM, and the high temperature color development layer 10BH serve as thermosensitive recording layers for image recording, and the Oth spacer layer 10BS0, the first spacer layer 10BS1, and the second spacer layer 10BS2 serve as intermediate layers for heat insulation and heat conduction.

In the configuration described above, the low temperature color development layer 10BL, the first spacer layer 10BS1, the middle temperature color development layer 10BM, the second spacer layer 10BS2, the high temperature color development layer 10BH, the functional layer 10F, the protection layer 10C, and the substrate 10A are the same as those of the second embodiment, and thus their detailed description will be omitted.

The ultra-low temperature color development layer 10BLL is a layer containing a temperature indicating material made of a thermosensitive material that makes color development when its temperature becomes a Oth threshold temperature Tll or more. The Oth threshold temperature Tll of the ultra-low temperature color development layer 10BLL is set to a range of 40°C to 90°C, for example.

The Oth spacer layer 10BSO is a layer that provides a thermal barrier when the ultra-low temperature color development layer 10BLL is set in a non color development state, to suppress the heat conduction from the low temperature color development layer 10BL side to the ultra-low temperature color development layer 10BLL.

Also in the second embodiment of the invention, for the purpose of improving the falsification preventing effect and the accuracy of authenticity determination, it is possible to perform coding to embed specific information by changing the arrangement of lines 13X extending up to the end face 10X of the recording medium 10, and/or by changing the color development layers to be caused to make color development, for every medium.

Next, an explanation will be given of code assignment, by taking three aspects as examples. However, without being limited to these three aspects, various aspects of assignment are possible.

[4.1] First Aspect

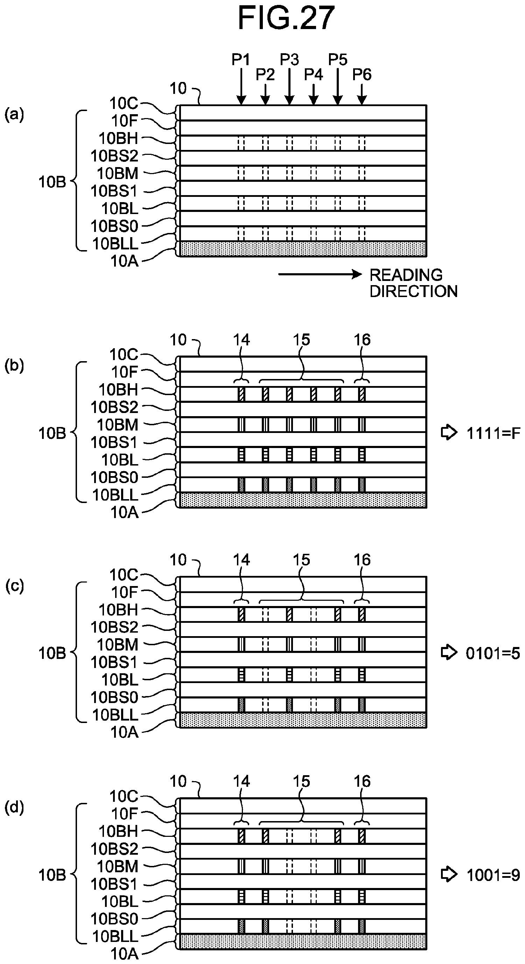

Figs. 27A to 27D are explanatory views of code assignment according to a first aspect of the second embodiment of the invention.

Each of Figs. 27A to 27D illustrates a partially enlarged explanatory view of a recording medium subjected to code assignment according to the first aspect of the second embodiment of the invention, as seen from its end face.

As illustrated in Fig. 27A, information recording positions P1 to P6 at six positions, for example, are set in each of the ultra-low temperature color development layer 10BLL, the low temperature color development layer 10BL, the middle temperature color development layer 10BM, and the high temperature color development layer 10BH of the recording medium 10.

Here, as illustrated in Figs. 27B to 27D, the information recording position P1 serves as the recording position of a start flag 14 that indicates the record starting position of information. The information recording position P6 serves as the recording position of an end flag 16 that indicates the record ending position of the information.

Further, the four information recording positions P2 to P5 serve as information recording positions that can each record information of one bit, and thus record a code expressed by four bits as a whole.

In the code assignment according to the first aspect, information code reading is performed in a direction from left to right as illustrated in Fig. 27A.

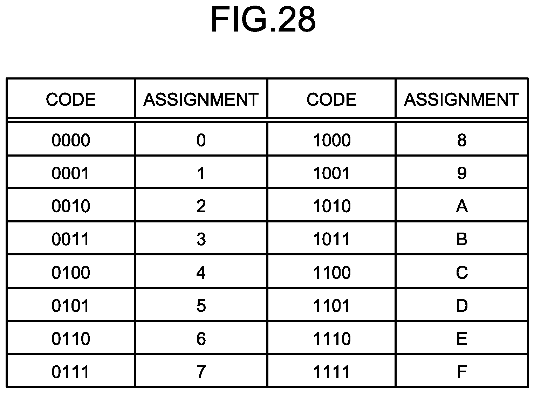

Fig. 28 is an explanatory diagram of a correlation table of an information record example in the code assignment according to the first aspect of the second embodiment of the invention.

In the first aspect, in each of the ultra-low temperature color development layer 10BLL, the low temperature color development layer 10BL, the middle temperature color development layer 10BM, and the high temperature color development layer 10BH of the recording medium 10, any one of 16 codes (0 to F in hexadecimal), each expressed by four bits, can be recorded at the information recording positions P2 to P5 as an information code 15, and the cords in the respective layers correspond to the same code. In other words, in the first aspect, a single code is recorded as a whole in the ultra-low temperature color development layer 10BLL, the low temperature color development layer 10BL, the middle temperature color development layer 10BM, and the high temperature color development layer 10BH of the recording medium 10.

Here, for example, in the example illustrated in Fig. 28B, in common to all the ultra-low temperature color development layer 10BLL, the low temperature color development layer 10BL, the middle temperature color development layer 10BM, and the high temperature color development layer 10BH, the information recording position P2 has a line, the information recording position P3 has a line, the information recording position P4 has a line, and the information recording position P5 has a line, so that the information code 15 = "1111" stands. Thus, it can be seen that the value of the information code 15 recorded here is "F" from the table of Fig. 28.

Similarly, in the example illustrated in Fig. 27C, in common to all the ultra-low temperature color development layer 10BLL, the low temperature color development layer 10BL, the middle temperature color development layer 10BM, and the high temperature color development layer 10BH, the information recording position P2 has no line, the information recording position P3 has a line, the information recording position P4 has no line, and the information recording position P5 has a line, so that the information code 15 = "0101" stands. Thus, it can be seen that the value of the information code 15 recorded here is "5" from the table of Fig. 28.

Further, in the example illustrated in Fig. 27D, in common to all the ultra-low temperature color development layer 10BLL, the low temperature color development layer 10BL, the middle temperature color development layer 10BM, and the high temperature color development layer 10BH, the information recording position P2 has a line, the information recording position P3 has no line, the information recording position P4 has no line, and the information recording position P5 has a line, so that the information code 15 = "1001" stands. Thus, it can be seen that the value of the information code 15 recorded here is "9" from the table of Fig. 28.

In the case described above, information of four bits is used. However, as the specific information, for example, an ID number ("12345678" in the example of Fig. 1) that can specify the owner of the recording medium 10 may be recorded, as in the first non-claimed example.

In this case, the start flag 14 and the end flag 16 only need to serve as marks for indicating embedment of the information code 15 between the flags, and thus may be formed with any color (single color or mixed color) as long as the drawing of lines can be recognized.

Here, in the examples of Figs. 27A to 27D, when the information code 15 is observed from the front face 10S of the recording medium 10, the code 15 is visually recognized as lines of black color due to color mixing of black (K), cyan (C), magenta (M), and yellow (Y). However, when the information code 15 is observed from the end face 10X of the recording medium 10, the code 15 is visually recognized in a state where black (K), cyan (C), magenta (M), and yellow (Y) make color development separately from each other.


[4.2] Second Aspect

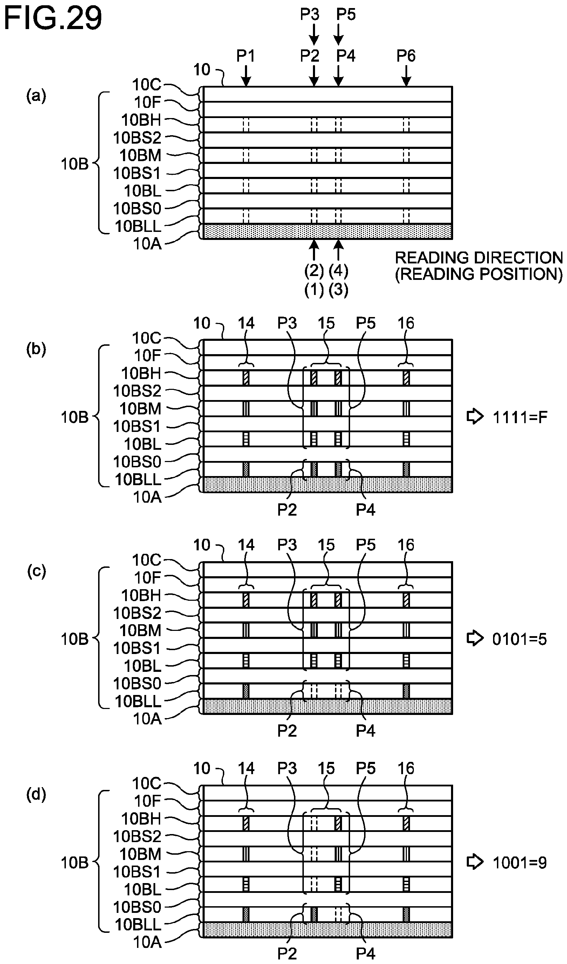

Figs. 29A to 29D are explanatory views of code assignment according to a second aspect of the second embodiment of the invention.

Each of Figs. 29A to 29D illustrates a partially enlarged explanatory view of a recording medium subjected to code assignment according to the second aspect of the second embodiment of the invention, as seen from its end face.

As illustrated in Fig. 29A, information recording positions P1 to P6 at six positions, for example, are set in the ultra-low temperature color development layer 10BLL, the low temperature color development layer 10BL, the middle temperature color development layer 10BM, and the high temperature color development layer 10BH of the recording medium 10.

Here, in the second aspect, unlike each of the embodiments described above, the following configuration is used. Specifically, the ultra-low temperature color development layer 10BLL includes an information recording position P2 and an information recording position P4, to each of which one bit is assigned by the presence or absence of color development. Further, the low temperature color development layer 10BL, the middle temperature color development layer 10BM, and the high temperature color development layer 10BH include an information recording position P3 and an information recording position P5, to each of which one bit is assigned by the presence or absence of color development as a whole (black (K) obtained by color mixing color development, or no color development). Thus, as a whole, information of four bits can be recorded.

With the configuration described above, in either case of making color development, i.e., when the ultra-low temperature color development layer 10BLL makes color development, or when all the low temperature color development layer 10BL, the middle temperature color development layer 10BM, and the high temperature color development layer 10BH make color development, the result is always black (K) even though the color tone is different. In this case, the information code embedment is difficult to find, and thus provides a merit to improve the falsification resistance.

In the code assignment according to the second aspect, information code reading is performed as illustrated in Fig. 29A, which is as follows. Specifically, reading is performed as in the order of the information recording position P2 of the ultra-low temperature color development layer 10BLL, to the information recording position P3 of the low temperature color development layer 10BL, the middle temperature color development layer 10BM, and the high temperature color development layer 10BH, to the information recording position P4 of the ultra-low temperature color development layer 10BLL, and to the information recording position P5 of the low temperature color development layer 10BL, the middle temperature color development layer 10BM, and the high temperature color development layer 10BH.

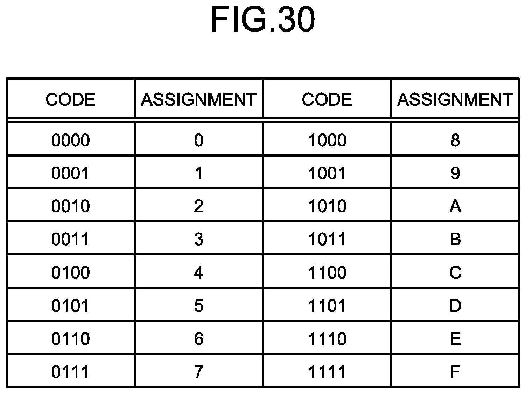

Fig. 30 is an explanatory diagram of a correlation table of an information record example in the code assignment according to the second aspect of the second embodiment of the invention.

In the case of this second aspect, any one of 16 codes (0 to F in hexadecimal), each expressed by four bits, can be recorded at the information recording positions P2 to P5 as an information code 15.

Here, for example, in the example illustrated in Fig. 29B, the information recording position P2 of the ultra-low temperature color development layer 10BLL has a line, the information recording position P3 of all the low temperature color development layer 10BL, the middle temperature color development layer 10BM, and the high temperature color development layer 10BH has a line, the information recording position P4 of the ultra-low temperature color development layer 10BLL has a line, and the information recording position P5 of all the low temperature color development layer 10BL, the middle temperature color development layer 10BM, and the high temperature color development layer 10BH has a line, so that the information code 15 = "1111" stands. Thus, it can be seen that the value of the information code 15 recorded here is "F" from the table of Fig. 30.

Similarly, in the example illustrated in Fig. 29c, the information recording position P2 of the ultra-low temperature color development layer 10BLL has no line, the information recording position P3 of all the low temperature color development layer 10BL, the middle temperature color development layer 10BM, and the high temperature color development layer 10BH has a line, the information recording position P4 of the ultra-low temperature color development layer 10BLL has no line, and the information recording position P5 of all the low temperature color development layer 10BL, the middle temperature color development layer 10BM, and the high temperature color development layer 10BH has a line, so that the information code 15 = "0101" stands. Thus, it can be seen that the value of the information code 15 recorded here is "5" from the table of Fig. 30.

Similarly, in the example illustrated in Fig. 29D, the information recording position P2 of the ultra-low temperature color development layer 10BLL has a line, the information recording position P3 of all the low temperature color development layer 10BL, the middle temperature color development layer 10BM, and the high temperature color development layer 10BH has no line, the information recording position P4 of the ultra-low temperature color development layer 10BLL has no line, and the information recording position P5 of all the low temperature color development layer 10BL, the middle temperature color development layer 10BM, and the high temperature color development layer 10BH has a line, so that the information code 15 = "1001" stands. Thus, it can be seen that the value of the information code 15 recorded here is "9" from the table of Fig. 30.

In the case described above, information of four bits is used. However, as the specific information, for example, an ID number ("12345678" in the example of Fig. 1) that can specify the owner of the recording medium 10 may be recorded, as in the first non-claimed example.

In this case, the start flag 14 and the end flag 16 only need to serve as marks for indicating embodment of the information code 15 between the flags, and thus may be formed with any color (single color or mixed color) as long as the drawing of lines can be recognized.

Here, also in the examples of Figs. 29A to 29D, when the information code 15 is observed from the front face 10S of the recording medium 10, the code 15 is visually recognized as lines of black color due to color development of black (K) or color mixing of cyan (C), magenta (M), and yellow (Y). However, when the information code 15 is observed from the end face 10X of the recording medium 10, the code 15 is visually recognized in a state where black (K), cyan (C), magenta (M), and yellow (Y) make color development separately from each other.

[4.3] Third Aspect

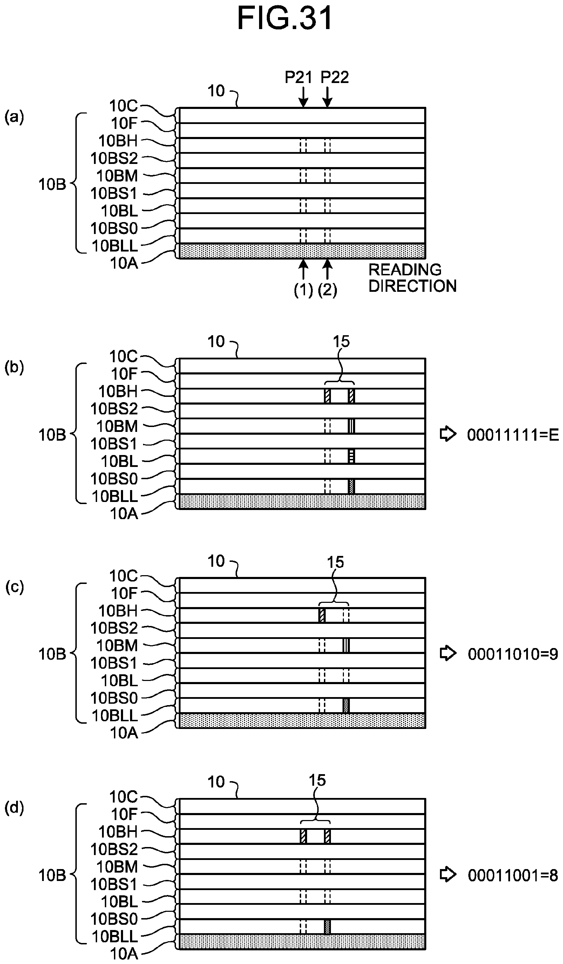

Figs. 31A to 31D are explanatory views of code assignment according to a third aspect of the second embodiment of the invention.

Each of Figs. 31A to 31D illustrates a partially enlarged explanatory view of a recording medium subjected to code assignment according to the third aspect of the fourth embodiment, as seen from its end face.

As illustrated in Fig. 31A, information recording positions P21 and P22 at two positions, for example, are set in each of the ultra-low temperature color development layer 10BLL, the low temperature color development layer 10BL, the middle temperature color development layer 10BM, and the high temperature color development layer 10BH of the recording medium 10.

Here, the information recording positions P21 and P22 serve as information recording positions that can each record information of one bit, and thus record a code expressed by eight bits as a whole.

In the code assignment according to the third aspect, information code reading is performed as illustrated in Fig. 31A, in which reading is performed to the information recording positions P21 in a direction from bottom to top, and then to the information recording positions P22 in a direction from bottom to top, so as to read a information code of eight bits as a whole.

In this case, the information recording positions P21 and the information recording positions P22 also provide functions of a start flag and an end flag. Accordingly, the information code has been coded such that, with respect to either set of the information recording positions P21 and the information recording positions P22, any one of the ultra-low temperature color development layer 10BLL, the low temperature color development layer 10BL, the middle temperature color development layer 10BM, and the high temperature color development layer 10BH of the recording medium 10 is caused to make color development.

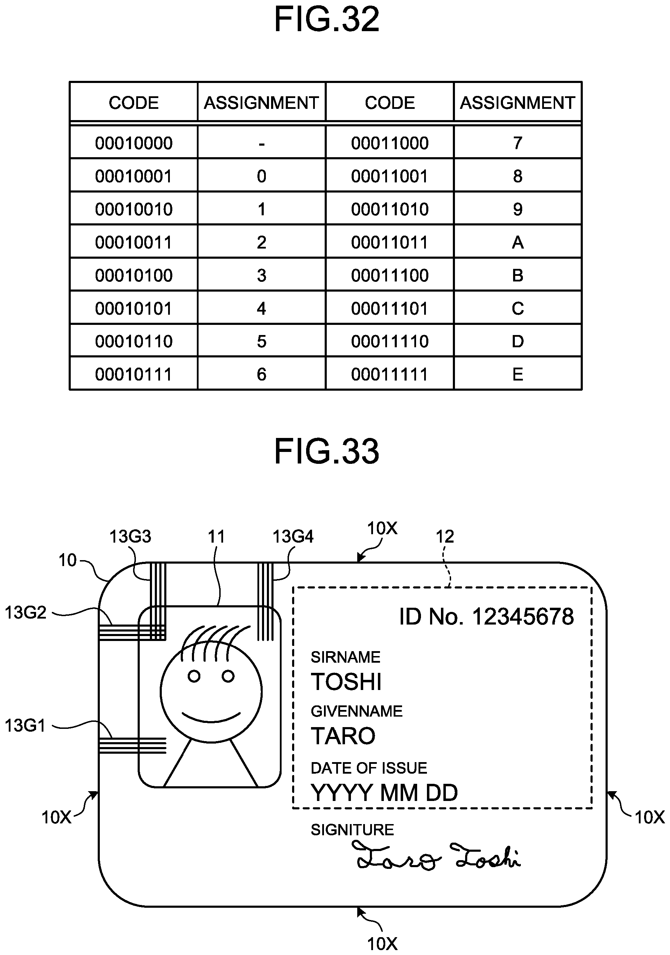

Fig. 32 is an explanatory diagram of part (where the upper-order four bits are 0001) of a correlation table of an information record example in the code assignment according to the third aspect of the second embodiment of the invention.

Accordingly, it is possible to assign codes in 225 ways = 15 ways × 15 ways (two information recording positions), except for the case where all the coded four bits is zero.

In this case, a layer with a line (line for security) to be formed in either one of the information recording position P21 and the information recording position P22 may be limited to only the high temperature color development layer 10BH closest to the surface layer. Then, as illustrated in Fig. 32, for example, where the assignments are limited to 15 types, which is the total of ten numbers of 0 to 9 plus five symbols, the recording time (drawing time) of lines (lines for security) can be shortened.

Here, for example, in the example illustrated in Fig. 32B, the information recording position P21 of the ultra-low temperature color development layer 10BLL has no line, the information recording position P21 of the low temperature color development layer 10BL has no line, the information recording position P21 of the middle temperature color development layer 10BM has no line, the information recording position P21 of the high temperature color development layer 10BH has a line, the information recording position P22 of the ultra-low temperature color development layer 10BLL has a line, the information recording position P22 of the low temperature color development layer 10BL has a line, the information recording position P22 of the middle temperature color development layer 10BM has a line, and the information recording position P22 of the high temperature color development layer 10BH has a line, so that the information code 15 = "00011111" stands. Thus, it can be seen that the value of the information code 15 recorded here is "E" from the table of Fig. 32.

Similarly, in the example illustrated in Fig. 32C, the information recording position P21 of the ultra-low temperature color development layer 10BLL has no line, the information recording position P21 of the low temperature color development layer 10BL has no line, the information recording position P21 of the middle temperature color development layer 10BM has no line, the information recording position P21 of the high temperature color development layer 10BH has a line, the information recording position P22 of the ultra-low temperature color development layer 10BLL has a line, the information recording position P22 of the low temperature color development layer 10BL has no line, the information recording position P22 of the middle temperature color development layer 10BM has a line, and the information recording position P22 of the high temperature color development layer 10BH has no line, so that the information code 15 = "00011010" stands. Thus, it can be seen that the value of the information code 15 recorded here is "9" from the table of Fig. 32.

Similarly, in the example illustrated in Fig. 32D, the information recording position P21 of the ultra-low temperature color development layer 10BLL has no line, the information recording position P21 of the low temperature color development layer 10BL has no line, the information recording position P21 of the middle temperature color development layer 10BM has no line, the information recording position P21 of the high temperature color development layer 10BH has a line, the information recording position P22 of the ultra-low temperature color development layer 10BLL has a line, the information recording position P22 of the low temperature color development layer 10BL has no line, the information recording position P22 of the middle temperature color development layer 10BM has no line, and the information recording position P22 of the high temperature color development layer 10BH has a line, so that the information code 15 = "00011001" stands. Thus, it can be seen that the value of the information code 15 recorded here is "8" from the table of Fig. 32.

In the case described above, information of eight bits is used.

However, as the specific information, for example, an ID number ("12345678" in the example of Fig. 1) that can specify the owner of the recording medium 10 may be recorded, as in the first non-claimed example.

[5] Third embodiment of the invention

In the embodiment described above, the recording medium 10 includes the image formation region 11 in which an image is formed by color development of the ultra-low temperature color development layer 10BLL in addition to the low temperature color development layer 10BL, the middle temperature color development layer 10BM, and the high temperature color development layer 10BH, and lines 13 serving as lines for security reach the image formed in the image formation region 11. However, from the viewpoint of preventing falsification, it suffices that a line (line for security) is formed in a state extending at any end face 10X of the recording medium 10 along the lamination surface of color development layers of the substrate 10A, and the presence or absence of the line for security can be optically identified at the end face 10X.

[5.1] First Aspect

Fig. 33 is an explanatory diagram of a recording medium according to a first aspect of the third embodiment of the invention.

For example, as illustrated in Fig. 33, line groups (line groups for security) 13G1 to 13G4, each composed of a plurality of lines 13X, may be arranged such that the end portions opposite to the respective end faces 10X are positioned inside the image formation region 11.

With this arrangement, the presence or absence of a line for security, and an information code, can be optically identified at any one of the end faces 10X. Further, the presence or absence of the line for security, and the information code, can also be optically identified from the front face 10S of the recording medium 10. Thus, confirmation of falsification becomes easier.

[5.2] Second Aspect

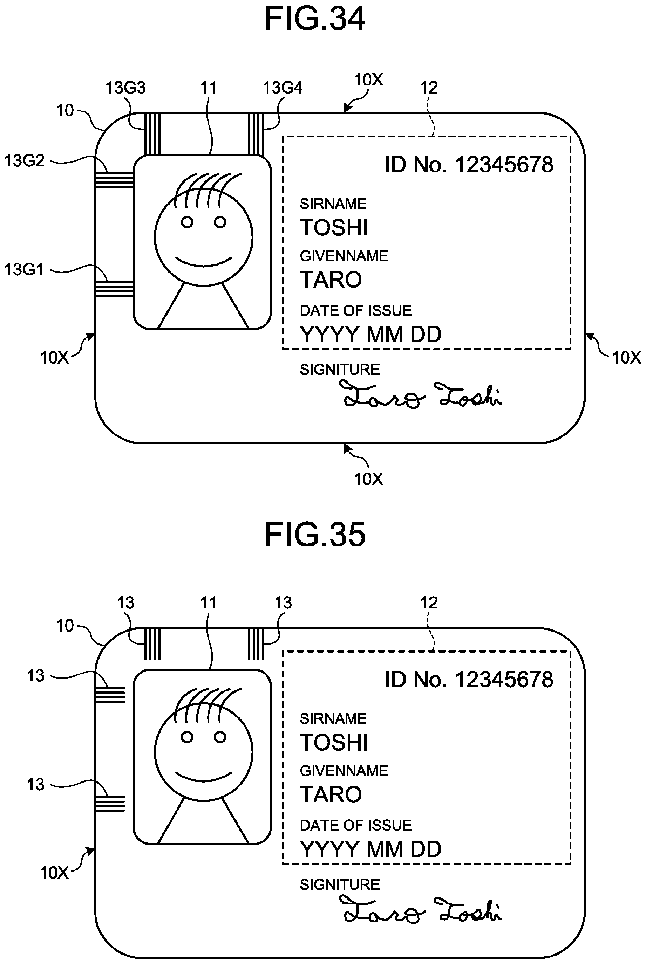

Fig. 34 is an explanatory diagram of a recording medium according to a second aspect of the third embodiment of the invention.

For example, as illustrated in Fig. 34, line groups (line groups for security) 13G1 to 13G4, each composed of a plurality of lines 13X, may be arranged such that the end portions opposite to the respective end faces 10X are set in contact with the image formation region 11.

Also with this arrangement, as in the first aspect, the presence or absence of a line for security, and an information code, can be optically identified at any one of the end faces 10X. Further, the presence or absence of the line for security, and the information code, can also be optically identified from the front face 10S of the recording medium 10. Thus, confirmation of falsification becomes easier.

[5.3] Third Aspect

Fig. 35 is an explanatory diagram of a recording medium according to a third aspect of the third embodiment of the invention.

For example, as illustrated in Fig. 35, line groups (line groups for security) 13G1 to 13G4, each composed of a plurality of lines 13X, may be arranged such that the end portions opposite to the respective end faces 10X do not reach the image formation region 11.

Also with this arrangement, an effect substantially the same as that of the first aspect and the second aspect can be obtained.

[6] Third non-claimed example

In the embodiment described above, the presence or absence of a line for security, and an information code, can be optically identified at any one of the end faces 10X, and the presence or absence of the line for security, and the information code, can also be optically identified from the front face of the recording medium 10. third non-claimed example relates to a case where a recording medium 10 is configured such that the presence or absence of lines for security, and information codes, cannot be optically identified from the front face 10S of the recording medium 10.

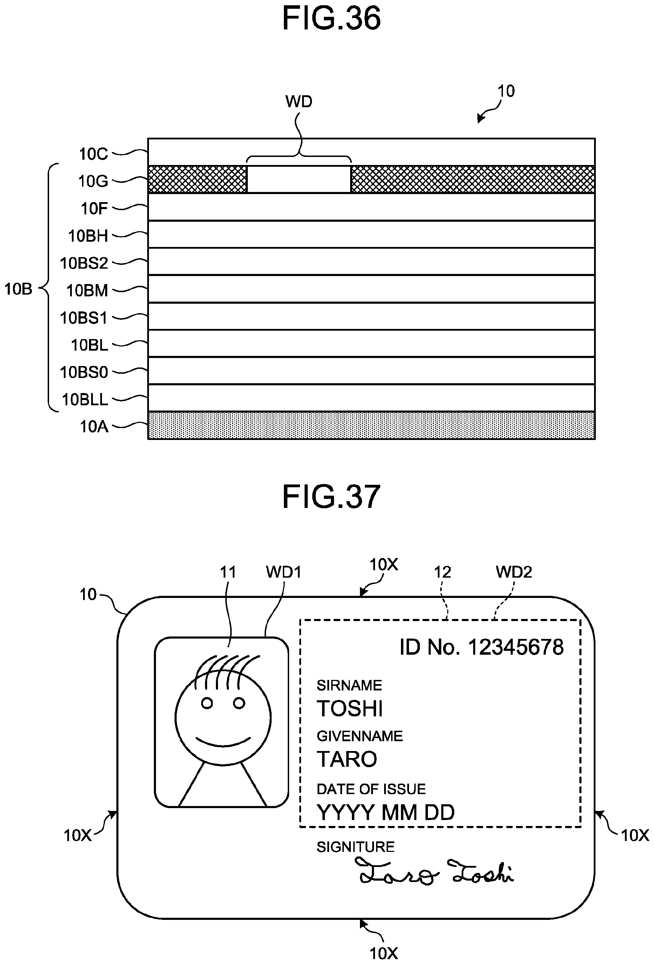

Fig. 36 is a schematic configuration view of a recording medium according to a third non-claimed example.

In Fig. 36, the constituent elements corresponding to those of the recording medium according to the second embodiment illustrated in Fig. 26 are denoted by the same reference symbols.

The recording medium 10 according to the third non-claimed example differs from the recording medium 10 according to the second embodiment as follows.

Specifically, a hiding layer 10G is laminated on the functional layer 10F to hide the presence of lines for security when the lines are observed from the front face 10S side of the recording medium 10. Further, the hiding layer 10G is provided with an opening WD that allows the recording contents in the image formation region 11 and/or the specific information recording area 12 to be visually recognized.

Fig. 37 is an external view of the recording medium according to the third non-claimed example. More specifically, for example, it is assumed that the hiding layer 10G is formed in the recording medium 10 illustrated in Fig. 34. In this case, as illustrated in Fig. 37, an opening WD1 is formed as an opening WD that allows the recording contents in the image formation region 11 to be visually recognized, and an opening WD2 is formed as an opening WD that allows the recording contents in the specific information recording area 12 to be visually recognized.

With the configuration described above, the presence or absence of lines for security, and information codes, cannot be optically identified any more from the front face 10S of the recording medium 10. Thus, it becomes more difficult to make forgery or alteration.

[7] Invisible information

This case is different from the above embodiments in the method of embedding the information code as explained in the respective embodiments and in that a type, etc., of information to be read when the information code embedded is read is superimposed on the facial image and is recorded as invisible information.

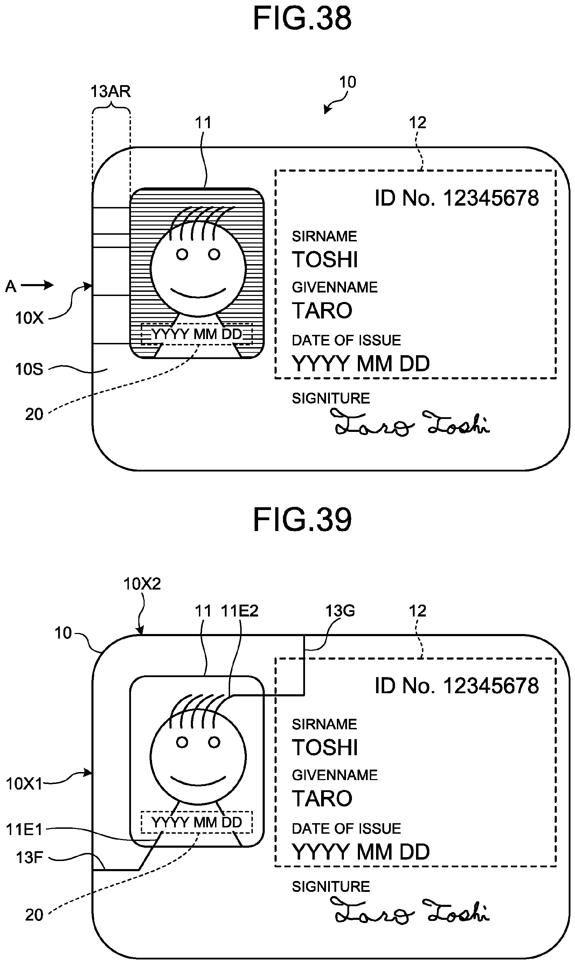

Fig. 38 is an explanatory diagram of a recording medium obtained by recording invisible information to the recording medium as illustrated in Fig. 1. Fig. 39 is an explanatory diagram of a recording medium obtained by recording invisible information to the recording medium as illustrated in Fig. 21.

In both cases of Figs. 38 and 39, the date of issue "YYYY MM DD" is directly recorded as invisible information 20.

The followings are possible as a method of recording the invisible information 20: for example, a method of recording with a fluorescent material that is excited by ultraviolet light and glows, a method of recording using a thermosensitive material in which a hue changes at or around a threshold temperature, a method of making an ink with these materials and printing, a method that is a combination of a plurality of methods of these methods, or the like.

Whether the recording medium 10 is authentic can be confirmed by confirming whether the invisible information 20 agrees with the information code embedded by a line extending up to the end face 10X1 or 10X2 of the recording medium 10 or whether the invisible information 20 has a correct correspondence relation (for example, whether the invisible information is bit invert data of the information code, two's complement data of the information code, hash data of the information code, or the like).

In the above-mentioned examples of Figs. 38 and 39, the date of issue "YYYY MM DD" is recorded to the information code; therefore, whether the recording medium 10 is authentic can be confirmed by confirming whether the information code agrees with the invisible information 20.

In these cases, the invisible information 20 may be formed with a fluorescent material that is excited by ultraviolet light and glows or may uses a thermosensitive material in which a hue changes at or around a threshold temperature. It is allowable to combine with a technique of making an ink with these materials and printing.

[8] Apparatus for confirming forgery or alteration

In the above description, no explanation has been given of an apparatus for confirming forgery or alteration on the basis of color development of the respective color development layers 10BLL, 10BL, 10BM, and 10BH at the end face 10X of the recording medium 10. A specific example of an apparatus (checking apparatus) for confirming forgery or alteration on the basis of color development of the respective color development layers 10BLL, 10BL, 10BM, and 10BH is thereafter described.

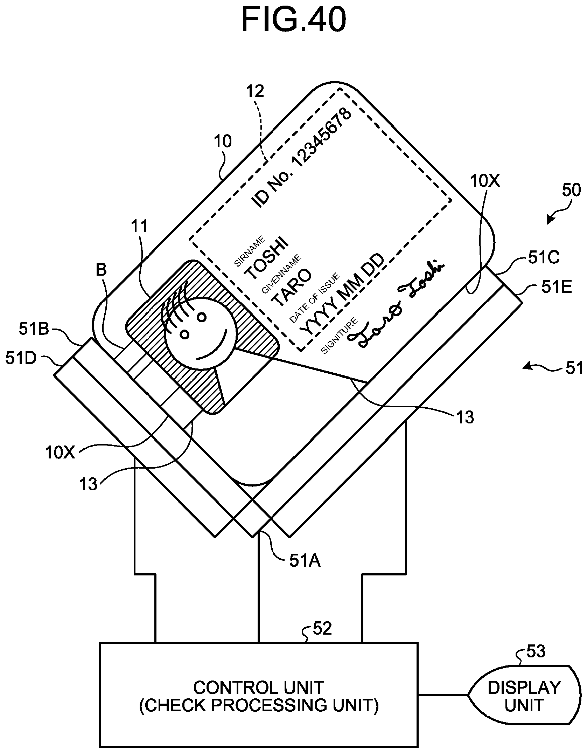

Fig. 40 is a schematic configuration block diagram of a checking apparatus.

In a roughly classified sense, the checking apparatus 50 includes a reading unit 51 configured to read the color development states of the respective color development layers 10BLL, 10BL, 10BM, and 10BH from two end faces 10X of a recording medium 10, a control unit 52 configured to confirm forgery or alteration on the basis of images of the end faces 10X read by the reading unit 51, and a display unit 53 configured to display a checking result under the control of the control unit 52.

The reading unit 51 includes an illumination part 51A that includes an LED or the like and emits illumination light, optical guide parts 51B and 51C for guiding illumination light emitted from the illumination part 51A to the respective corresponding end faces 10X of the recording medium 10, an imaging part (camera) 51D for picking up an image of the end face 10X of the recording medium 10 opposed to the optical guide part 51B, and an imaging part (camera) 51E for picking up an image of the end face 10X of the recording medium 10 opposed to the optical guide part 51C.

In this case, the control unit 52 may have a hardware configuration utilizing an ordinary computer, which includes a control device, such as an MPU, a storage device, such as a Read Only Memory (ROM) or RAM, an external storage device, such as an HDD or CD drive device, and an input device, such as a keyboard and/or mouse.

In this case, it is assumed that the control unit 52 treats, as a checking object, an ID number ("12345678" in the case of Fig. 40) recorded in the specific information recording area 12, and the ID number is recorded by lines for security on the end faces 10X.

Next, an explanation will be given of a checking sequence.

First, a checking instruction is give to the checking apparatus 50, and the ID number recorded in the specific information recording area 12 is input.

At this time, the input of the ID number recorded in the specific information recording area 12 is performed by using a character recognition device (not illustrated) to read the ID number recorded in the specific information recording area 12, or the input is performed manually.

Then, the control unit 52 of the checking apparatus 50 controls the illumination part 51A to emit illumination light. The illumination light emitted by the illumination part 51A is guided by the optical guide parts 51B and 51C to the respective corresponding end faces 10X of the recording medium 10.

Then, the imaging part 51D picks up an image of the end face 10X of the recording medium 10 opposed to the optical guide part 51B, and outputs the image data to the control unit 52.

Further, the imaging part 51E picks up an image of the end face 10X of the recording medium 10 opposed to the optical guide part 51C, and outputs the image data to the control unit 52.

Then, the control unit 52 detects, for example, a start flag 14 and an end flag 16 as described above, from each of the input pieces of image data, and then extracts the ID number on the basis of information codes 15, each of which is recorded between the start flag 14 and the end flag 16.

Then, this extracted ID number is compared with the input ID number, and the checking result thus obtained is displayed by the display unit 53.

As described above, it is possible to easily read information from the end faces 10X of the recording medium 10, and to determine the authenticity of this recording medium 10.

[9] Possible modifications within the scope of the appended claims

[9.1] First Modification

In the above description, the respective color development layers corresponding to cyan (C), magenta (M), yellow (Y), and black (K) are caused to make color development by using a single laser beam source, such as a laser device with a wavelength of 2,000 nm or more, fiber laser device, $CO_2$ laser device, or semiconductor laser device. However, it may be arranged such that the color development layers corresponding to cyan (C), magenta (M), and yellow (Y) are caused to make color development by using a thermal head, laser device of a wavelength of 2,000 nm or more, fiber laser device, $CO_2$ laser device, or semiconductor laser device, while the color development layer corresponding to black (K) is caused to make color development by using a laser with a wavelength of 1,064 nm, such as a YAG laser device or $YVO_4$ laser device.

[9.2] Second Modification

In the above description, an explanation has been given of a case where an embodiment is applied to a configuration including three color development layers, or four color development layers. However, an embodiment may be similarly applied to a configuration including two color development layers, or five or more color development layers.

[9.3] Further non-claimed example

The checking apparatus 50 is configured as a stationary type apparatus. However, a checking apparatus may be configured as a handy type apparatus (portable apparatus) by integrally constructing the reading unit 51, the control unit 52, and the display unit 53.

[9.4] Additional non-claimed example

A program to be executed by the control unit 52 according to the eighth embodiment may be provided in a state recorded in a computer readable recording medium, such as a CD-ROM, flexible disk (FD), CD-R, or Digital Versatile Disk (DVD), by a file in an installable format or executable format.

Alternatively, a program to be executed by the control unit 52 according to the eighth embodiment may be provided such that the program is stored in a computer connected to a network, such as the internet, and is downloaded via the network. Alternatively, a program to be executed by the control unit 52 may be prepared such that the program is provided or distributed via a network, such as the internet.

Alternatively, a program to be executed by the control unit 52 according to the eighth embodiment may be provided in a state incorporated in an ROM or the like in advance.

Although the embodiments of the present invention have been explained, these embodiments are merely provided for an exemplifying purpose, and do not intend to limit the scope of the present invention. These novel embodiments can be carried out with other various configurations, and various abbreviations, substitutions, or modifications can be made without departing from the scope of the appended claims. These embodiments and modifications thereof are embraced by the scope of the appended claims.

**Claims**

1. A recording medium (10) in a card form, the recording medium (10) having a front face (10S), a back face and end faces (10X) and comprising:

   a substrate (10A); and

a color development layer (10B) including a plurality of color development layers (10BL, 10BM, 10BH) laminated on the substrate (10A) and being provided with a plurality of lines for security (13A2 - 13E2) **characterized in that** each of the plurality of lines

extends in a first direction from at least one of the end faces (10X) of the recording medium (10) along a lamination surface of the color development layer (10B) that is laminated on the substrate (10A), the lamination surface being parallel to the front face (10S) of the recording medium (10), such that each of the lines for security (13A2 - 13E2) is optically identifiable from the front face (10S) of the recording medium (10A),

each of the plurality of lines for security (13E2 - 13E2) extends in a second direction along at least one of the end faces (10X) of the recording medium (10A), from which the plurality of lines for security (13A2 - 13 E2) extend in the first direction, across an entire thickness of one of the color development layers (10BL, 10BM, 10BH) such that presence of the lines for security is optically identifiable at the end face (10X), wherein

the plurality of lines for security (13A2 - 13E2) are arranged at positions based on a predetermined information code on the end face (10X),

the plurality of lines for security (13A2 - 13E2) correspond to a single information code and are arranged at positions based on this information code in a thickness direction of the end face (10X), and

the plurality of color development layers (10BL, 10BM, 10BH) are configured to differ from each other in energy threshold necessary for color development and in color given by color development.

2. The recording medium (10) according to claim 1, wherein, in the plurality of color development layers (10BL, 10BM, 10BH), a plurality of lines for security (13A2 - 13E2) corresponding to a same information code are arranged in the thickness direction of the end face (10X).

3. The recording medium (10) according to claim 1, wherein

the recording medium (10) includes an image formation region (11) in which an image is formed by color development of the color development layer (10B), and

the line for security (13A - 13E) is formed in a state reaching the image formation region (11).

4. The recording medium (10) according to claim 1, wherein

the recording medium (10) includes an image formation region (11) in which an image is formed by color development of the color development layer (10B), and

the line for security extends from a high contrast portion of the image, which is defined when the image is gray-scaled, toward the end face (10X).

5. The recording medium (10) according to claim 1, wherein

the recording medium (10) includes an image formation region (11) in which an image is formed by color development of the color development layer (10B), and

the line for security is formed as a background image (11A) in the image formation region (11).

6. The recording medium (10) according to claim 1, wherein a hiding layer (10G) is laminated to hide presence of the line for security when the line for security is observed from a front face side (10S) of the card.

7. The recording medium (10) according to claim 1, wherein the plurality of color development layers (10BL, 10BM, 10BH) are laminated in ascending order of the energy threshold from the substrate (10A) toward an energy input face.

8. The recording medium (10) according to claim 1, wherein the plurality of color development layers (10BL, 10BM, 10BH) correspond to a plurality of colors selected from cyan, magenta, yellow, and black.

9. The recording medium according to claim 8, wherein

the plurality of color development layers (10BLL, 10BL, 10BM, 10BH) correspond to respective ones of cyan, magenta, yellow, and black, and

the color development layers (10BLL, 10BL, 10BM, 10BH) corresponding to cyan, magenta, and yellow have been set in a color development state or non color development state, simultaneously with formation of the lines for security corresponding to the information code.

**Patentansprüche**

1. Aufzeichnungsträger (10) in Kartenform, wobei der Aufzeichnungsträger (10) eine Vorderseite (10S), eine Rückseite und Endflächen (10X) aufweist und umfasst:

   ein Substrat (10A); und
   eine Farbentwicklungsschicht (10B) mit mehreren von Farbentwicklungsschichten (10BL, 10BM, 10BH), die auf das Substrat (10A) geschichtet sind und mit mehreren Sicherheitslinien (13A2 - 13E2) versehen sind, **dadurch gekennzeichnet, dass**
   sich jede der mehreren Linien in einer ersten Richtung von mindestens einer der Endflächen (10X) des Aufzeichnungsträgers (10) entlang einer Schichtfläche der Farbentwicklungsschicht (10B) erstreckt, die auf das Substrat (10A) geschichtet ist, wobei die Schichtfläche parallel zur Vorderseite (10S) des Aufzeichnungsträgers (10) ist, so dass jede der Sicherheitslinien (13A2 - 13E2) von der Vorderseite (10S) des Aufzeichnungsträgers (10A) aus optisch identifizierbar ist,
   sich jede der mehreren Sicherheitslinien (13E2 - 13E2) in einer zweiten Richtung entlang mindestens einer der Endflächen (10X) des Aufzeichnungsträgers (10A) erstreckt, von der sich die mehreren Sicherheitslinien (13A2 - 13E2) in der ersten Richtung über eine gesamte Dicke einer der Farbentwicklungsschichten (10BL, 10BM, 10BH) erstrecken, so dass das Vorhandensein der Sicherheitslinien an der Endfläche (10X) optisch identifizierbar ist, wobei
   die mehreren Sicherheitslinien (13A2 - 13E2) an Positionen angeordnet sind, die auf einem vorbestimmten Informationscode auf der Endfläche (10X) basieren,
   die mehreren Sicherheitslinien (13A2 - 13E2) einem einzelnen Informationscode entsprechen und an Positionen angeordnet sind, die auf diesem Informationscode in einer Dickenrichtung der Endfläche (10X) basieren, und
   die mehreren Farbentwicklungsschichten (10BL, 10BM, 10BH) so eingerichtet sind, dass sie sich in der für die Farbentwicklung erforderlichen Energieschwelle und in der durch die Farbentwicklung gegebenen Farbe voneinander unterscheiden.

2. Aufzeichnungsträger (10) nach Anspruch 1, wobei in den mehreren Farbentwicklungsschichten (10BL, 10BM, 10BH) mehrere Sicherheitslinien (13A2 - 13E2), die einem gleichen Informationscode entsprechen, in der Dickenrichtung der Endfläche (10X) angeordnet sind.

3. Aufzeichnungsträger (10) nach Anspruch 1, wobei

   der Aufzeichnungsträger (10) einen Bilderzeugungsbereich (11) aufweist, in dem durch Farbentwicklung der Farbentwicklungsschicht (10B) ein Bild erzeugt wird, und
   die Sicherheitslinie (13A - 13E) in einem Zustand erzeugt wird, in dem sie den Bilderzeugungsbereich (11) erreicht.

4. Aufzeichnungsträger (10) nach Anspruch 1, wobei

   der Aufzeichnungsträger (10) einen Bilderzeugungsbereich (11) aufweist, in dem durch Farbentwicklung der Farbentwicklungsschicht (10B) ein Bild erzeugt wird, und
   sich die Sicherheitslinie von einem Kontrastabschnitt des Bilds, der definiert ist, wenn das Bild grau ist, zur Endfläche (10X) hin erstreckt.

5. Aufzeichnungsträger (10) nach Anspruch 1, wobei

   der Aufzeichnungsträger (10) einen Bilderzeugungsbereich (11) aufweist, in dem durch Farbentwicklung der Farbentwicklungsschicht (10B) ein Bild erzeugt wird, und
   die Sicherheitslinie als Hintergrundbild (11A) im Bilderzeugungsbereich (11) erzeugt wird.

6. Aufzeichnungsträger (10) nach Anspruch 1, wobei eine Abdeckschicht (10G) geschichtet ist, um das Vorhandensein der Sicherheitslinie abzudecken, wenn die Sicherheitslinie von einer Vorderseitenseite (10S) der Karte aus betrachtet wird.

7. Aufzeichnungsträger (10) nach Anspruch 1, wobei die mehreren Farbentwicklungsschichten (10BL, 10BM, 10BH) in aufsteigender Reihenfolge der Energieschwelle vom Substrat (10A) zu einer Energieeingangsfläche hin geschichtet sind.

8. Aufzeichnungsträger (10) nach Anspruch 1, wobei die mehreren Farbentwicklungsschichten (10BL, 10BM, 10BH) mehreren Farben entsprechen, die aus Cyan, Magenta, Gelb und Schwarz ausgewählt sind.

9. Aufzeichnungsträger nach Anspruch 8, wobei

die mehreren Farbentwicklungsschichten (10BLL, 10BL, 10BM, 10BH) Cyan, Magenta, Gelb bzw. Schwarz entsprechen und
die Farbentwicklungsschichten (10BLL, 10BL, 10BM, 10BH), die Cyan, Magenta und Gelb entsprechen, gleichzeitig mit der Erzeugung der Sicherheitslinien, die dem Informationscode entsprechen, in einen Farbentwicklungszustand oder einen Nicht-Farbentwicklungszustand versetzt wurden.

**Revendications**

1. Support d'enregistrement (10) sous forme de carte, le support d'enregistrement (10) ayant une face avant (10S), une face arrière et des faces d'extrémité (10X) et comprenant :

un substrat (10A) ; et
une couche de développement de couleur (10B) comprenant une pluralité de couches de développement de couleur (10BL, 10BM, 10BH) stratifiées sur le substrat (10A) et étant pourvue d'une pluralité de lignes de sécurité (13A2 - 13E2), **caractérisé en ce que**
chacune de la pluralité de lignes s'étend dans une première direction à partir d'au moins l'une des faces d'extrémité (10X) du support d'enregistrement (10) le long d'une surface de stratification de la couche de développement de couleur (10B) qui est stratifiée sur le substrat (10A), la surface de stratification étant parallèle à la face avant (10S) du support d'enregistrement (10), de sorte que chacune des lignes de sécurité (13A2 - 13E2) est optiquement identifiable à partir de la face avant (10S) du support d'enregistrement (10A),
chacune de la pluralité de lignes de sécurité (13E2 - 13E2) s'étend dans une seconde direction le long d'au moins l'une des faces d'extrémité (10X) du support d'enregistrement (10A), à partir de laquelle la pluralité de lignes de sécurité (13A2 - 13E2) s'étendent dans la première direction, sur toute l'épaisseur de l'une des couches de développement de couleur (10BL, 10BM, 10BH) de sorte que la présence des lignes de sécurité est optiquement identifiable au niveau de la face d'extrémité (10X), dans lequel
la pluralité de lignes de sécurité (13A2 - 13E2) sont agencées à des positions basées sur un code d'information prédéterminé sur la face d'extrémité (10X),
la pluralité de lignes de sécurité (13A2 - 13E2) correspondent à un code d'information unique et sont agencées à des positions basées sur ce code d'information dans une direction d'épaisseur de la face d'extrémité (10X), et
la pluralité de couches de développement de couleur (10BL, 10BM, 10BH) sont configurées pour différer les unes des autres en termes de seuil d'énergie nécessaire pour le développement de couleur et en termes de couleur donnée par le développement de couleur.

2. Support d'enregistrement (10) selon la revendication 1, dans lequel, dans la pluralité de couches de développement de couleur (10BL, 10BM, 10BH), une pluralité de lignes de sécurité (13A2 - 13E2) correspondant à un même code d'information sont agencées dans la direction d'épaisseur de la face d'extrémité (10X).

3. Support d'enregistrement (10) selon la revendication 1, dans lequel

le support d'enregistrement (10) comprend une région de formation d'image (11) dans laquelle une image est formée par le développement de couleur de la couche de développement de couleur (10B), et
la ligne de sécurité (13A - 13E) est formée dans un état atteignant la région de formation d'image (11).

4. Support d'enregistrement (10) selon la revendication 1, dans lequel

le support d'enregistrement (10) comprend une région de formation d'image (11) dans laquelle une image est formée par le développement de couleur de la couche de développement de couleur (10B), et
la ligne de sécurité s'étend à partir d'une partie à contraste élevé de l'image, qui est définie lorsque l'image est en échelle de gris, vers la face d'extrémité (10X).

5. Support d'enregistrement (10) selon la revendication 1, dans lequel

le support d'enregistrement (10) comprend une région de formation d'image (11) dans laquelle une image est formée par le développement de couleur de la couche de développement de couleur (10B), et
la ligne de sécurité est formée comme une image d'arrière-plan (11A) dans la région de formation d'image (11).

6. Support d'enregistrement (10) selon la revendication 1, dans lequel une couche de masquage (10G) est stratifiée pour masquer la présence de la ligne de sécurité lorsque la ligne de sécurité est observée depuis un côté de face avant (10S) de la carte.

7. Support d'enregistrement (10) selon la revendication 1, dans lequel la pluralité de couches de développement de couleur (10BL, 10BM, 10BH) sont stratifiées dans l'ordre croissant du seuil d'énergie à partir du substrat (10A) vers une face d'entrée d'énergie.

8. Support d'enregistrement (10) selon la revendication 1, dans lequel la pluralité de couches de développement de couleur (10BL, 10BM, 10BH) correspondent à une pluralité de couleurs sélectionnées parmi le cyan, le magenta, le jaune et le noir.

9. Support d'enregistrement selon la revendication 8, dans lequel

la pluralité de couches de développement de couleur (10BLL, 10BL, 10BM, 10BH) correspondent à des couleurs respectives parmi le cyan, le magenta, le jaune et le noir, et
les couches de développement de couleur (10BLL, 10BL, 10BM, 10BH) correspondant au cyan, au magenta et au jaune ont été réglées dans un état de développement de couleur ou un état de non-développement de couleur, simultanément avec la formation des lignes de sécurité correspondant au code d'information.

# FIG.1

ID No. 12345678

SIRNAME
TOSHI

GIVENNAME
TARO

DATE OF ISSUE
YYYY MM DD

SIGNITURE

# FIG.2

# FIG.3

(a)

(b) ⇨ 1111=F

(c) ⇨ 0101=5

(d) ⇨ 1001=9

# FIG.4

| CODE | ASSIGNMENT | CODE | ASSIGNMENT |
|------|-----------|------|-----------|
| 0000 | 0 | 1000 | 8 |
| 0001 | 1 | 1001 | 9 |
| 0010 | 2 | 1010 | A |
| 0011 | 3 | 1011 | B |
| 0100 | 4 | 1100 | C |
| 0101 | 5 | 1101 | D |
| 0110 | 6 | 1110 | E |
| 0111 | 7 | 1111 | F |

# FIG.5

# FIG.6

(a)                    (b)                    (c)

# FIG.7

EP 3 597 444 B1

# FIG.8

| | HIGH TEMPERATURE COLOR DEVELOPMENT LAYER | MIDDLE TEMPERATURE COLOR DEVELOPMENT LAYER | LOW TEMPERATURE COLOR DEVELOPMENT LAYER |
|---|---|---|---|
| POWER DENSITY | PDh | PDm | PDl |
| RECORDING TIME | th | tm | tl |

# FIG.9

# FIG.10

# FIG.11

# FIG.12

| CODE | ASSIGNMENT | CODE | ASSIGNMENT |
|------|-----------|------|-----------|
| 0000 | 0 | 1000 | 8 |
| 0001 | 1 | 1001 | 9 |
| 0010 | 2 | 1010 | A |
| 0011 | 3 | 1011 | B |
| 0100 | 4 | 1100 | C |
| 0101 | 5 | 1101 | D |
| 0110 | 6 | 1110 | E |
| 0111 | 7 | 1111 | F |

# FIG.13

(a)

P11 P12 P13 P14

10

10C
10F
10BH
10BS2
10B
10BM
10BS1
10BL
10A

(1) (2) READING
DIRECTION

(b)

10        14      15      16

10C
10F
10BH
10BS2
10B
10BM
10BS1
10BL
10A

⇨ 111111=!

(c)

10        14      15      16

10C
10F
10BH
10BS2
10B
10BM
10BS1
10BL
10A

⇨ 000101=5

(d)

10        14      15      16

10C
10F
10BH
10BS2
10B
10BM
10BS1
10BL
10A

⇨ 100100=a

# FIG.14

| CODE | ASSIGN-MENT | CODE | ASSIGN-MENT | CODE | ASSIGN-MENT | CODE | ASSIGN-MENT |
|---|---|---|---|---|---|---|---|
| 000000 | 0 | 010000 | G | 100000 | W | 110000 | m |
| 000001 | 1 | 010001 | H | 100001 | X | 110001 | n |
| 000010 | 2 | 010010 | I | 100010 | Y | 110010 | o |
| 000011 | 3 | 010011 | J | 100011 | Z | 110011 | p |
| 000100 | 4 | 010100 | K | 100100 | a | 110100 | q |
| 000101 | 5 | 010101 | L | 100101 | b | 110101 | r |
| 000110 | 6 | 010110 | M | 100110 | c | 110110 | s |
| 000111 | 7 | 010111 | N | 100111 | d | 110111 | t |
| 001000 | 8 | 011000 | O | 101000 | e | 111000 | u |
| 001001 | 9 | 011001 | P | 101001 | f | 111001 | v |
| 001010 | A | 011010 | Q | 101010 | g | 111010 | w |
| 001011 | B | 011011 | R | 101011 | h | 111011 | x |
| 001100 | C | 011100 | S | 101100 | i | 111100 | y |
| 001101 | D | 011101 | T | 101101 | j | 111101 | z |
| 001110 | E | 011110 | U | 101110 | k | 111110 | ? |
| 001111 | F | 011111 | V | 101111 | l | 111111 | ! |

# FIG.15

(a)

P21 P22

10C
10F
10BH
10BS2
10B
10BM
10BS1
10BL
10A
10

(1) (2) READING
DIRECTION

(b)

15

10C
10F
10BH
10BS2
10B
10BM
10BS1
10BL
10A
10

⇨ 111111=m

(c)

15

10C
10F
10BH
10BS2
10B
10BM
10BS1
10BL
10A
10

⇨ 100101=P

(d)

15

10C
10F
10BH
10BS2
10B
10BM
10BS1
10BL
10A
10

⇨ 100100=0

# FIG.16

| CODE | ASSIGN-MENT | CODE | ASSIGN-MENT | CODE | ASSIGN-MENT | CODE | ASSIGN-MENT |
|---|---|---|---|---|---|---|---|
| 000000 | - | 010000 | - | 100000 | - | 110000 | - |
| 000001 | - | 010001 | 7 | 100001 | L | 110001 | Z |
| 000010 | - | 010010 | 8 | 100010 | M | 110010 | a |
| 000011 | - | 010011 | 9 | 100011 | N | 110011 | b |
| 000100 | - | 010100 | A | 100100 | O | 110100 | c |
| 000101 | - | 010101 | B | 100101 | P | 110101 | d |
| 000110 | - | 010110 | C | 100110 | Q | 110110 | e |
| 000111 | - | 010111 | D | 100111 | R | 110111 | f |
| 001000 | - | 011000 | - | 101000 | - | 111000 | - |
| 001001 | 0 | 011001 | E | 101001 | S | 111001 | g |
| 001010 | 1 | 011010 | F | 101010 | T | 111010 | h |
| 001011 | 2 | 011011 | G | 101011 | U | 111011 | i |
| 001100 | 3 | 011100 | H | 101100 | V | 111100 | j |
| 001101 | 4 | 011101 | I | 101101 | W | 111101 | k |
| 001110 | 5 | 011110 | J | 101110 | X | 111110 | l |
| 001111 | 6 | 011111 | K | 101111 | Y | 111111 | m |

# FIG.17

(a)

P21 P22

10

10C
10F
10BH
10BS2
10BM
10BS1
10BL
10A

10B

(1) (2)  READING
         DIRECTION

(b)

10

15

10C
10F
10BH
10BS2
10BM
10BS1
10BL
10A

10B

⇨ 001111=9

(c)

10

15

10C
10F
10BH
10BS2
10BM
10BS1
10BL
10A

10B

⇨ 000101=6

(d)

10

15

10C
10F
10BH
10BS2
10BM
10BS1
10BL
10A

10B

⇨ 001001=0

# FIG.18

| CODE | ASSIGN-MENT | CODE | ASSIGN-MENT | CODE | ASSIGN-MENT | CODE | ASSIGN-MENT |
|---|---|---|---|---|---|---|---|
| 000000 | - | 010000 | - | 100000 | - | 110000 | - |
| 000001 | - | 010001 | - | 100001 | - | 110001 | - |
| 000010 | - | 010010 | - | 100010 | - | 110010 | - |
| 000011 | - | 010011 | - | 100011 | - | 110011 | - |
| 000100 | - | 010100 | - | 100100 | - | 110100 | - |
| 000101 | - | 010101 | - | 100101 | - | 110101 | - |
| 000110 | - | 010110 | - | 100110 | - | 110110 | - |
| 000111 | - | 010111 | - | 100111 | - | 110111 | - |
| 001000 | - | 011000 | - | 101000 | - | 111000 | - |
| 001001 | 0 | 011001 | 7 | 101001 | - | 111001 | - |
| 001010 | 3 | 011010 | A | 101010 | - | 111010 | - |
| 001011 | 1 | 011011 | 8 | 101011 | - | 111011 | - |
| 001100 | 5 | 011100 | C | 101100 | - | 111100 | - |
| 001101 | 6 | 011101 | D | 101101 | - | 111101 | - |
| 001110 | 4 | 011110 | B | 101110 | - | 111110 | - |
| 001111 | 2 | 011111 | 9 | 101111 | - | 111111 | - |

# FIG.19

(a) R=M+Y

(b) B=C+M

(c) K=C+M+Y

EP 3 597 444 B1

# FIG.20

# FIG.21

# FIG.22

ID No. 12345678

SIRNAME
TOSHI

GIVENNAME
TARO

DATE OF ISSUE
YYYY MM DD

SIGNITURE

# FIG.23

ID No. 12345678

SIRNAME
TOSHI

GIVENNAME
TARO

DATE OF ISSUE
YYYY MM DD

SIGNITURE

# FIG.24

# FIG.25

# FIG.26

# FIG.27

(a)

(b)

$\Rightarrow$ 1111=F

(c)

$\Rightarrow$ 0101=5

(d)

$\Rightarrow$ 1001=9

# FIG.28

| CODE | ASSIGNMENT | CODE | ASSIGNMENT |
|------|------------|------|------------|
| 0000 | 0 | 1000 | 8 |
| 0001 | 1 | 1001 | 9 |
| 0010 | 2 | 1010 | A |
| 0011 | 3 | 1011 | B |
| 0100 | 4 | 1100 | C |
| 0101 | 5 | 1101 | D |
| 0110 | 6 | 1110 | E |
| 0111 | 7 | 1111 | F |

# FIG.29

(a)

10C
10F
10BH
10BS2
10B { 10BM
10BS1
10BL
10BS0
10BLL
10A

P1    P3 P5
      P2 P4    P6

10

(2) (4)
(1) (3)

READING DIRECTION
(READING POSITION)

(b)

10  14  P3  15  P5  16

10C
10F
10BH
10BS2
10B { 10BM
10BS1
10BL
10BS0
10BLL
10A

⇨ 1111=F

P2        P4

(c)

10  14  P3  15  P5  16

10C
10F
10BH
10BS2
10B { 10BM
10BS1
10BL
10BS0
10BLL
10A

⇨ 0101=5

P2        P4

(d)

10  14  P3  15  P5  16

10C
10F
10BH
10BS2
10B { 10BM
10BS1
10BL
10BS0
10BLL
10A

⇨ 1001=9

P2        P4

# FIG.30

| CODE | ASSIGNMENT | CODE | ASSIGNMENT |
|------|-----------|------|-----------|
| 0000 | 0 | 1000 | 8 |
| 0001 | 1 | 1001 | 9 |
| 0010 | 2 | 1010 | A |
| 0011 | 3 | 1011 | B |
| 0100 | 4 | 1100 | C |
| 0101 | 5 | 1101 | D |
| 0110 | 6 | 1110 | E |
| 0111 | 7 | 1111 | F |

# FIG.31

(a)

10B { 10C, 10F, 10BH, 10BS2, 10BM, 10BS1, 10BL, 10BS0, 10BLL, 10A

10  P21 P22

READING DIRECTION  (1) (2)

(b)

10B { 10C, 10F, 10BH, 10BS2, 10BM, 10BS1, 10BL, 10BS0, 10BLL, 10A

10  15

⇨ 00011111=E

(c)

10B { 10C, 10F, 10BH, 10BS2, 10BM, 10BS1, 10BL, 10BS0, 10BLL, 10A

10  15

⇨ 00011010=9

(d)

10B { 10C, 10F, 10BH, 10BS2, 10BM, 10BS1, 10BL, 10BS0, 10BLL, 10A

10  15

⇨ 00011001=8

# FIG.32

| CODE | ASSIGNMENT | CODE | ASSIGNMENT |
|---|---|---|---|
| 00010000 | - | 00011000 | 7 |
| 00010001 | 0 | 00011001 | 8 |
| 00010010 | 1 | 00011010 | 9 |
| 00010011 | 2 | 00011011 | A |
| 00010100 | 3 | 00011100 | B |
| 00010101 | 4 | 00011101 | C |
| 00010110 | 5 | 00011110 | D |
| 00010111 | 6 | 00011111 | E |

# FIG.33

ID No. 12345678

SIRNAME
TOSHI

GIVENNAME
TARO

DATE OF ISSUE
YYYY MM DD

SIGNITURE

# FIG.34

13G3  11  13G4  10X  12

10

13G2

13G1

10X

ID No. 12345678

SIRNAME
TOSHI

GIVENNAME
TARO

DATE OF ISSUE
YYYY MM DD

SIGNITURE
*Taro Toshi*

10X

10X

# FIG.35

13  11  13  12

10

13

13

10X

ID No. 12345678

SIRNAME
TOSHI

GIVENNAME
TARO

DATE OF ISSUE
YYYY MM DD

SIGNITURE
*Taro Toshi*

# FIG.36

WD

10

10C

10G

10F

10BH

10BS2

10BM

10BS1

10BL

10BS0

10BLL

10B

10A

# FIG.37

11   WD1   10X   12   WD2

10

10X

ID No. 12345678

SIRNAME
TOSHI

GIVENNAME
TARO

DATE OF ISSUE
YYYY MM DD

SIGNITURE

*Taro Toshi*

10X

10X

10X

# FIG.38

# FIG.39

# FIG.40

**EP 3 597 444 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4844894 B
- JP 4390377 B
- DE 102014015280 A1
- JP 2013107289 A

- JP 3889431 B
- JP 4215817 B
- JP 4329744 B
- JP 4391286 B